(19) Europäisches Patentamt

European Patent Office

Office européen des brevets

(11) **EP 4 556 936 A1**

(12) **EUROPEAN PATENT APPLICATION**

(43) Date of publication:
**21.05.2025 Bulletin 2025/21**

(21) Application number: **23209717.0**

(22) Date of filing: **14.11.2023**

(51) International Patent Classification (IPC):
**G01S 7/00** $^{(2006.01)}$   **G01S 13/34** $^{(2006.01)}$
**G01S 13/38** $^{(2006.01)}$

(52) Cooperative Patent Classification (CPC):
**G01S 7/006; G01S 13/38**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Vestel Elektronik Sanayi ve Ticaret A.S.**
**45030 Manisa (TR)**

(72) Inventors:
• **RAFIQUE, Saira**
  **34810 Istanbul (TR)**
• **ARSLAN, Hüseyin**
  **34810 Istanbul (TR)**

(74) Representative: **Grünecker Patent- und Rechtsanwälte**
**PartG mbB**
**Leopoldstraße 4**
**80802 München (DE)**

(54) **AN ADAPTIVE MULTIPLE FREQUENCY SHIFT KEYING (MFSK) WAVEFORM DESIGN FOR MULTI-TARGET ISAC APPLICATIONS**

(57)    Some embodiments in the present disclosure relate to transmitting and/or receiving of a joint communication and sensing (JSC) signal. A first waveform for a first signal is obtained, wherein the first waveform includes two or more discrete steps of a chirp in a first frequency range. A second waveform for a second signal is obtained, wherein the second waveform includes two or more discrete steps of a chirp in a second frequency range. A JSC signal is transmitted, which is based on the first signal having the first waveform and the second signal having the second waveform. The JSC signal includes steps, wherein each step of the JSC signal includes one step out of the discrete steps of the first signal having the first waveform and one step out of the discrete steps of the second signal having the second waveform, and in the JSC signal, a discrete step out of the first signal or a discrete step out of the second signal is associated with at least one bit.

**Fig. 12**

EP 4 556 936 A1

**Description**

The present disclosure relates to joint sensing and communication transmissions. In particular, the present disclosure provides methods and apparatuses for such wireless applications.

BACKGROUND

Wireless communication has been advancing over several decades now. Exemplary notable standards organizations include the 3rd Generation Partnership Project (3GPP) and IEEE 802.11, commonly referred to as Wi-Fi.

Cognitive radio is one of the emerging technologies for exploiting the system spectrum. Cognitive radio devices are supposed to dynamically use the best wireless channels in their vicinity to improve spectrum efficiency. In order to achieve this, spectrum occupancy information may be desirable to help modeling and predicting the spectrum availability for efficient dynamic spectrum access. Spectrum occupancy prediction may be based on using the information on previous spectrum occupancy to predict future occupancy. Such a prediction is based on exploiting the inherent correlation between past and future occupancies. Some approaches exploit time-domain correlation and thus cast spectrum prediction as a time-series prediction. Some approaches additionally consider exploiting the correlation along the frequency axis, and thus exploit time-frequency correlation. Correlation may also exist in the spatial domain. Thus, exploiting the correlation in all mentioned domains may be desirable.

Future wireless devices are expected to be sensing capable, or at times, solely wireless sensors, to support communication applications and/or provide a wide range of other applications, such as fully immersive extended reality, improving quality of life by enabling smart environments, improving health-related applications through non-invasive tests and vital signs monitoring.

SUMMARY

The present invention relates to methods and apparatuses for transmitting and/or receiving joint sensing and communication (JSC) signals.

The invention is defined by the scope of independent claims. Some of the advantageous embodiments are provided in the dependent claims.

According to an embodiment, a method for a wireless device is provided for transmitting a joint sensing and communication, JSC, signal, comprising: obtaining a first waveform for a first signal, wherein the first waveform includes two or more discrete steps of a chirp in a first frequency range, obtaining a second waveform for a second signal, wherein the second waveform includes two or more discrete steps of a chirp in a second frequency range, transmitting the JSC signal, which is based on the first signal having the first waveform and the second signal having the second waveform, wherein the JSC signal includes steps, wherein each step of the JSC signal includes one step out of the discrete steps of the first signal having the first waveform and one step out of the discrete steps of the second signal having the second waveform, and wherein in the JSC signal, a discrete step out of the first signal or a discrete step out of the second signal is associated with at least one bit.

According to an embodiment, a method for a wireless device is provided for receiving a joint sensing and communication, JSC, signal, comprising: receiving the JSC signal, which is based on a first signal having a first waveform and a second signal having a second waveform, wherein the JSC signal includes steps, each step of the JSC signal includes one step out of discrete steps of the first signal having the first waveform and one step out of discrete steps of the second signal having the second waveform, the first waveform includes two or more discrete steps of a chirp in a first frequency range, the second waveform includes two or more discrete steps of a chirp in a second frequency range, and in the JSC signal, a discrete step out of the first signal or a discrete step out of the second signal is associated with at least one bit, and the method further comprising obtaining a bit sequence based on the discrete steps of the first signal and/or the discrete steps of the second signal.

According to an embodiment, a wireless device for is provided for transmitting a joint sensing and communication, JSC, signal. The wireless device comprises processing circuitry configured to obtain a first waveform for a first signal, wherein the first waveform includes two or more discrete steps of a chirp in a first frequency range, obtain a second waveform for a second signal, wherein the second waveform includes two or more discrete steps of a chirp in a second frequency range, transmit the JSC signal, which is based on the first signal having the first waveform and the second signal having the second waveform, wherein the JSC signal includes steps, wherein each step of the JSC signal includes one step out of the discrete steps of the first signal having the first waveform and one step out of the discrete steps of the second signal having the second waveform, and wherein in the JSC signal, a discrete step out of the first signal or a discrete step out of the second signal is associated with at least one bit.

According to an embodiment, a wireless device for is provided for receiving a joint sensing and communication, JSC, signal. The wireless device comprises processing circuitry configured to receive the JSC signal, which is based on a first signal having a first waveform and a second signal having a second waveform, wherein the JSC signal includes steps, each step of the JSC signal includes one step out of discrete steps of the first signal having the first waveform and one step out of discrete steps of the second signal having the second waveform, the first waveform includes two or more discrete steps of a chirp in a first frequency range, the second waveform includes two or more discrete steps of a chirp in a second frequency range, and in the JSC signal, a discrete step out of the first signal or a discrete step out of the second signal is associated with at least one bit, and obtain a bit sequence based on the discrete steps of the first signal and/or the discrete steps of the second signal.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a," "an," and "the" include plural referents unless the context clearly dictates otherwise.

BRIEF DESCRIPTION OF DRAWINGS

An understanding of the nature and advantages of various embodiments may be realized by reference to the following figures.

Fig. 1      is a block diagram illustrating a basic communication system;
Fig. 2      is a block diagram illustrating a scheduling device with a plurality of wireless devices of various types;
Fig. 3      is a schematic drawing illustrating various frame format depending on whether the application generating the frame is sensing, communication of JSC;
Fig. 4a      is a schematic drawing illustrating a simple sensing scenarios in absence of objects to be detected;
Fig. 4b      is a schematic drawing illustrating a simple sensing scenarios in presence of objects to be detected;
Fig. 5a      is a schematic drawing illustrating a sensing scenario with multiple devices communicating and sensing via line of sight;
Fig. 5b      is a schematic drawing illustrating a sensing scenario with multiple devices communicating and sensing via non line of sight;
Fig. 6      shows an exemplary waveform of a linear chirp;
Fig. 7      shows an exemplary waveform of a hyperbolic chirp;
Fig. 8      illustrates exemplarily a transmitted and a reflected linear chirp signal;
Fig. 9      is an exemplary time-frequency diagram for a transmitted triangular chirp and its reflection;
Fig. 10      exemplarily illustrates ghost targets;
Fig. 11a      is an exemplary time-frequency diagram for a first signal having a first waveform including discrete steps of a chirp;
Fig. 11b      is an exemplary time-frequency diagram for a JSC signal including discrete steps of a first signal and discrete steps of a second signal;
Fig. 12      is an exemplary time-frequency diagram for a JSC signal for a long range scenario;
Fig. 13      is an exemplary time-frequency diagram for a JSC signal for a short range scenario;
Fig. 14      is an exemplary time-frequency diagram for a JSC signal for a long range and high-mobility scenario;
Fig. 15      is an exemplary time-frequency diagram for a JSC signal for a short range and high-mobility scenario;
Fig. 16      exemplarily illustrates a processing of a received signal to obtain a measurement result;
Fig. 17      illustrates exemplary associations of bits to discrete steps of the JSC signal;
Fig. 18      exemplarily illustrates a transmission and reception of a JSC signal;
Fig. 19      exemplarily illustrates an adaption of parameters on which a JSC signal is based;
Fig. 20      is an exemplary time-frequency diagram for an amplitude-modulated first signal;
Fig. 21      is an exemplary time-frequency diagram for a JSC signal including an amplitude-modulated first signal;
Fig. 22      illustrates a first exemplary processing of a JSC signal including an amplitude-modulated first signal;
Fig. 23      illustrates a second exemplary processing of a JSC signal including an amplitude-modulated first signal;
Fig. 24a      is a flowchart illustrating a method for transmitting a JSC signal;
Fig. 24b      is a flowchart illustrating a method for receiving a JSC signal;
Fig. 25a      is a block diagram illustrating an exemplary apparatus for transmitting and/or receiving JSC signals;
Fig. 25b      is a block diagram illustrating an exemplary memory for an apparatus transmitting a JSC signal;
Fig. 25c      is a block diagram illustrating an exemplary memory for an apparatus receiving a JSC signal.

DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

Although the aforementioned techniques may be successful in some cases, they do not provide full information or awareness about the future spectrum or its usage. Meanwhile, wireless sensing is gaining popularity in commercial devices, for environment monitoring, health monitoring, and numerous other applications. Military use of wireless sensing such as radar has always been popular. Sensing applications generate signals, which may typically have a pattern different from those of some communication applications. For instance, most wireless sensing applications generate periodic signal transmissions of varying periodicity. However, not every signal is suitable for each scenario. Effectively adapting a frame format including sensing signals may result in less spectrum and power wastage.

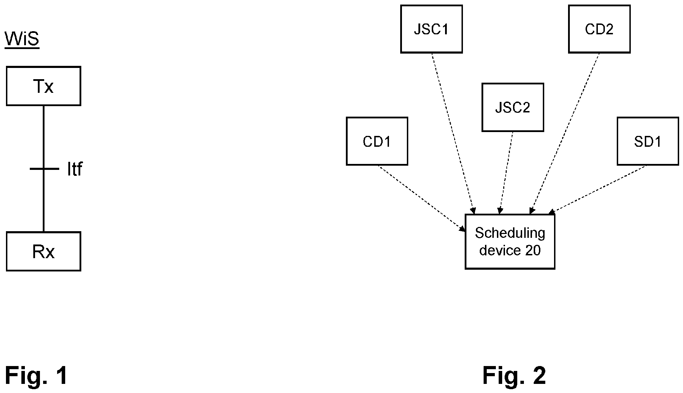

**Fig. 1** illustrates an exemplary wireless system WiS in which Tx represents a transmitter and Rx represents a receiver of the wireless signal. The transmitter Tx is capable of transmitting a signal to the receiver Rx or to a group of receivers or to broadcast a signal over an interface Itf. The interface may be any wireless interface. The interface may be specified by means of resources, which can be used for the transmission and reception by the transmitter Tx and the receiver Rx. Such resources may be defined in one or more (or all) of the time domain, frequency domain, code domain, and space domain. It is noted that in general, the "transmitter" and "receiver" may be also both integrated into the same device. In other words, the devices Tx and Rx in Fig. 1 may respectively also include the functionality of the Rx and Tx.

The present disclosure is not limited to any particular transmitter Tx, receiver Rx and/or interface Itf implementation. However, it may be applied readily to some existing communication systems as well as to the extensions of such systems, or to new communication systems. Exemplary existing communication systems may be, for instance the 5G New Radio (NR) in its current or future releases, and/or the IEEE 802.11 based systems such as the recently studied IEEE 802.11 be or the like. The wireless signal is not necessarily a communication signal in the sense that it does not necessarily carry out human or machine communication. It may be, in particular, a sensing signal such as a radar signal or sounding a signal or any other kind of wireless signal from a sensing device such as some signal reporting sensing results to another device(s).

For instance, the amendment IEEE 802.11bf - Wireless Local Area Network (WLAN) Sensing - may include support for wireless sensing in WLAN networks. Some embodiments may be used to enhance the performance of devices complying with this standard, e.g. to reduce the amount of redundant sensing signals in an area or a network. The fifth-generation (5G) New Radio (NR) standard, 6G standards or other future standards may also apply wireless sensing as its part of future cellular communications networks. Some embodiments of the present disclosure may help to predict the empty spaces in the licensed-exempt spectrum during opportunistic spectrum usage, where most wireless sensing is expected to take place. The present disclosure is also applicable to other communication technologies such as 3G or communication technologies under long-term evolution (LTE)/LTE Unlicensed (LTE-U).

As mentioned above, spectrum awareness is an important part of cognitive radio (CR). Some embodiments of the present disclosure may facilitate the identification and prediction of sensing transmissions. The IEEE 802.22 and IEEE 802.15 standard support CR and may thus profit from the present disclosure. The present disclosure is also applicable to low-power wide-area network (LPWAN) technologies, as it aids in increasing power efficiency through reducing the number of redundant sensing transmissions. Thus, it is related to LPWAN standards such as Wize, ZigBee, NarrowBand IoT, and LoRaWAN. In general, some embodiments can be used in high frequencies - or millimeter waves (mm-waves) - as the spectrum availability and propagation characteristics are suitable for high-resolution wireless sensing. It can be used for managing resources for wireless sensing.

There may be separate devices including the functionality of the Rx and Tx, respectively. The transmitter Tx and receiver Rx may be implemented in any device such as a base station (eNB, AP) or terminal (UE, STA), or in any other entity of the wireless system WiS. A device such as a base station, access point, or terminal may implement both Rx and Tx. The present disclosure is not limited to any particular transmitter Tx, receiver Rx and/or interface Itf implementation. However, it may be applied readily to some existing communication systems as well as to the extensions of such systems, or to new communication systems. Exemplary existing communication systems may be, for instance, the 5G New Radio (NR) in its current or future releases, and/or the IEEE 802.11 based systems such as the recently studied IEEE 802.11be or the like. Sensing applications signals may also be embedded within resources provided by one or more or the known systems such as some IEEE 802.11 standards or their possible specific extensions for supporting sensing applications.

Future wireless devices are expected to be sensing capable, or at times, solely wireless sensors, to support communication applications and/or provide a wide range of other applications, such as fully immersive extended reality, improving quality of life by enabling smart environments, improving health-related applications through non-invasive tests and vital signs monitoring, and much more. Wireless sensing applications may require periodic or continuous sensing transmissions. However, allowing all sensing/sensing capable devices to transmit their own sensing transmissions may reduce spectral efficiency and degrade the performance of networks operating in the license-exempt bands. Additionally, because sensing transmissions are periodic, there is a strong likelihood that they will cause interference to communication transmissions if they are scheduled opportunistically, or if they have opportunistic channel access mechanisms. This problem can be solved by including sensing-aware channel access and sensing coordination protocols in the standards. However, these would only enable communication and coordination for sensing and devices within the same network. At the same time, this would increase control signalization overhead and complexity. Wireless communication trends are heading towards decentralized and minimum-coordination networks, with the coexistence of a larger number of wireless networks in the same area. As such, methods to identify and predict, or the act of identifying and predicting, future sensing transmissions before transmitting are required in the standards. This would allow devices to better allocate their resources and schedule their transmissions.

Wireless sensing is a process of obtaining information or awareness of the environment through measurements on received (e.g. reflected or directly received) electromagnetic signals. In this definition, processes such as spectrum-/channel sensing, radar, joint radar and communication, WLAN sensing, and other methods can be considered as wireless sensing methods. Most wireless sensing methods have either periodic or continuous transmission patterns. An example could be a radar, where a continuous signal or periodic pulses are transmitted. Another example could be channel state information (CSI) based WLAN sensing, where packets are transmitted with some periodicity.

For example, important signal characteristics for radar-based sensing may include periodicity, bandwidth, frequency, number of antennas and/or training sequences. In the CSI-based sensing, important signal characteristics may include, for example, periodicity, bandwidth, frequency and/or number of antennas.

The sensing transmissions may have a specific frame design or transmission mechanism, which is specific for some sensing application(s) and may vary based on the sensing application requirements and environment conditions. Periodicity is an important condition for sensing applications, as disruptions in the periodicity of transmitted/received signals due to interference from other devices, the inability to schedule transmissions, or access the channel using channel access protocols may cause a disruption of measurements. This may cause false alarms, missed detections, reduced resolution of sensed information, overall performance degradation of the sensing application. Depending on the application, this could have severe monetary consequences or life risks.

Signal identification allows devices to identify some features of a signal, such as wireless technology (LTE, 5G, etc.), waveform, modulation type, etc., based on some characteristics of the signals, such as bandwidth, spectrogram image, etc. There are some applications in which certain characteristics are identified for the purpose of synchronization or authentication. Also, spectrum sensing is known, which is used to identify primary users' spectrum occupancy status. However, it may require continuous spectrum sensing. Alternatively, spectrum prediction techniques can be used to save time, energy, and computation overheads required by spectrum sensing.

In future wireless communications, there may be several wireless sensing applications. Generally, sensing applications use continuous signals (with some periodicity), which may degrade the spectral efficiency drastically. This is especially the case where numerous sensing applications/devices are used at the same time and/or in the same area.

Scheduling of transmissions may be performed by a scheduling device 20, as shown in Fig. 2. The scheduling device 20 may receive a request for scheduling a transmission of a signal by a wireless device. The wireless device may be a communication device, a sensing device, or a joint sensing and communication (JSC) device. Fig. 2 shows a plurality of various devices to request resources for signal transmission from the scheduling device 20. In particular, the plurality of devices includes communication devices CD1 and CD2, JSC devices JSC1 and JSC2, as well as a sensing device SD1. In general, a communication device is a device configured to run an application, which makes use of wireless communication, such as a communication according to a wireless standard.

Sensing devices have wireless sensing functionality. They are configured to run a sensing application. These devices may be also configurable or configured to perform wireless communication to transmit their sensed measurements, which is typically a small amount of data compared to amounts of data transmitted by usual communication applications or devices. In the sensing, measurements are taken as the parameters (features) which can be extracted from the wireless signal received, whether directly or after some processing. Some non-limiting examples of measured parameters include received signal strength indicator (RSSI), channel state information (CSI), range, velocity, or the like.

JSC devices are configured to run both the communication application(s) and the sensing application(s). For example, the main function of the JSC devices may be communication, meaning they may have a large amount of data to transmit, but they can perform wireless sensing as well, to improve communication performance or for a user application, such as navigation, or the like. For example, the main function of the JSC devices may be sensing, but they can perform communication as well. The importance of sensing and communication may be equal.

Some non-limiting examples of sensing devices include smart bands, non-invasive medical sensors, such as heart rate monitors, body mass monitors, or the like. Non-limiting examples of applications supported (implemented) by JSC devices include object tracking and/or user tracking for beam management, physical layer security through physical user (human) identification, or the like. Non-limiting exemplary devices include cellphones, laptops, tablets, access points (APs), or the like.

*Wireless sensing applications and characteristics*

A sensing session may be composed of one or more of the following phases: setup phase, measurement phase, reporting phase, and termination phase. In the setup phase of a sensing session, a sensing session is established, and operational parameters associated with the sensing session are determined and may be exchanged between STAs. In the measurement phase of a sensing session, sensing measurements are performed. In the reporting phase of a sensing session, sensing measurement results are reported. In the termination phase of a sensing session, STAs stop performing measurements and terminate the sensing session.

When more than one independent device is involved in the sensing process (i.e. collaborative wireless sensing), sensing may be performed after some planning by the involved devices. An initiating station (ISTA) is the device which may initiates the wireless sensing process, generally by requesting some resources (transmissions, measurements, etc.) from other devices. A responding station (RSTA) may respond to the ISTA by transmitting sensing transmissions and/or making measurements on sensing signals transmitted by other RSTA and/or making spectrum measurements. These measurements may be communicated to the ISTA or some processor (which in turn will communicate the results of the sensing to the ISTA or sensing requesting application associated with the ISTA).

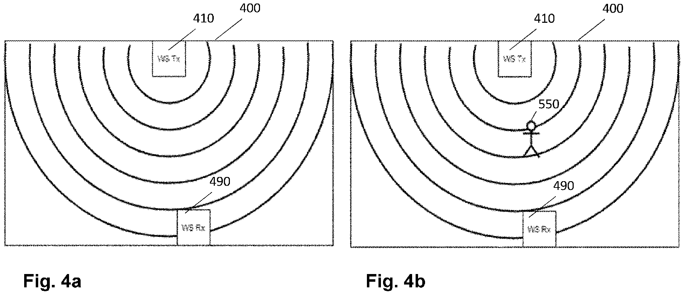

Fig. 4a and 4b show an illustration of a generic sensing application. Here, wireless sensor (WS) transmitter (Tx) 410 is the wireless sensor transmitter and WS receiver (Rx) 490 is the wireless sensor receiver. The WS Tx and WS Rx are synchronized, and may coordinate with each other, either through wireless signalization or via a wired connection. The WS Tx 410 and the WS Rx 490 are located in a limited area, such as a room 400. The concentric circle portions illustrate the electromagnetic field (wireless sensing signal) generated by the WS Tx 410. As can be seen in the figure, the WS Rx 490 is in the range of the wireless sensing signal. As discussed above, the wireless sensing signal may be a sensing pulse or continuous signal such as radar or a sounding signal. However, it may be also reporting of a regular measurement in a packet form or the like.

**Fig. 4a** is only an example configuration of wireless sensing hardware. Other configurations could include more than one transmitters and/or more than one receivers, transceivers, etc. Here, the term transceiver denotes a receiver or a transmitter or a combination of both. Initially, the WS Tx 410 may transmits the sensing signals when there is nothing to be detected (there is no object in the monitored object size range), as shown in Fig. 4a. The WS Rx 490 receives these sensing signals and takes measurements, for example, CSI or any signal strength indicating measurements. Then, when there is something to be detected, which is shown as a stick man 450 in **Fig. 4b,** the changes in the measurement indicates that. In other words, the presence of the object 450 changes the channel and thus, the received signal, which can be detected at WS Rx 490. It is noted that this is only an example in which there are cooperating transmitter and receiver WS. However, the present disclosure is not limited thereto and instead of detecting signal transmitted from a certain transmitter located in a position different from the position of the receiver, some sensing applications may rely on a transceiver including co-located transmitter and receiver, such as a pulse radar in which case the signal detected is a signal reflected from the detected object.

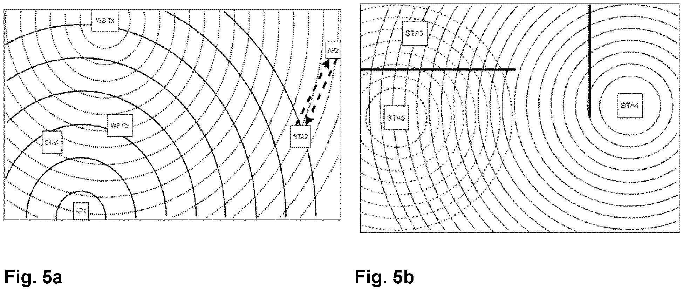

**Fig. 5a and 5b** show further different exemplary sensing scenarios. The different devices performing sensing and communication in the region can be solely sensing devices, shown as WS Tx and WS Rx. Alternatively, or in addition, the sensing may be performed between APs (or other network controllers/coordinators) and stations (STA)s, or between STAs and other STAs. At the same time, other network devices can be communicating. The sensing devices may be line of sight (LOS), as shown in Fig. 5, or non-line of sight (nLOS), as shown in Fig. 5b. For example, in Fig. 5, a WS Tx transmits a first sensing signal (dotted line). An AP1 transmits another sensing signal (solid line). STA1 may receive the sensing signal from the AP1 whereas WS Rx may receive the sensing signal from the WS Tx. However, the STA1 may also use the sensing signal from WS Tx and the WS Rx may also receive the sensing signal from the AP1 in some scenarios. Here, by receiving, what is meant is detecting as present and possibly processing further, i.e. not merely receiving as a part of noise. Moreover, AP2 and STA2 are in communication with each other, i.e. exchange communication signal. All these devices are in LoS in this simplified example. Some or all of these devices may operate in the same or at least partially overlapping spectrum.

As shown in the figures, the sensing signals may have different periodicity (indicated by different density of the concentric circle portions illustrating the sensing signal). In this case, identifying the sensing applications without direct communication or coordination with another wireless device may be beneficial. In response to the detection of a sensing signal, the devices can use signals, which are suitable for them rather than transmitting their own sensing signals. For example, once the STA1 detects that WS Tx is transmitting a sensing signal, it may use the sensing signal in addition or alternatively to the sensing signal from the AP1. It is even possible that AP1 detects sensing signal from WS Tx and stops transmitting own sensing signal, since one sensing signal may be sufficient. Or, vice versa, WS Tx detects that AP1 transmits a sensing signals and stops own transmission of the sensing signal. As is clear to those skilled in the art, various implementations of coordination and adaption of the sensing environment may be provided once the sensing applications (signals from sensing applications) have been detected in an area.

Fig. 5b shows a scenario in which there is not necessarily a LoS between some or all of the devices. In the figure, in fact none of the devices STA3, STA4, and STA5 present in the sensing area has a LoS to the other devices. Nevertheless, still, sensing signals may be received at the sensing signal receiving devices. E.g. STA5 has no LoS to STA3 and STA4, but may still receive their sensing signal. Thus, STA5 may decide to switch off the own signal and use the sensing signal of STA4 or STA3 or the like. Using the sensing application identification and prediction technique discussed above, devices can learn which sensing application the signals are for, predict their duration and future spectrum usage and either schedule their own signals such that there is no interference (resource allocation) or utilize these signals for their own sensing application.

In the above description, some particular examples were given. However, the present disclosure is not limited to those examples. Rather, variations and modifications may be advantageous for some scenarios. For example, any features that are different for sensing and communication signals can be used to differentiate them, such as frame structure, periodicity, resolution, RSS/RSSI values, or some features of the sensing that will be defined in the future standards, such as periodic channel access mechanisms, back-off behavior, special sensing sequences or waveforms, or the like. The RSS/RSSI can be used instead of PSD for detecting spectrum occupancy and/or for measurement of the signal to determine whether it is a communication or a sensing signal or to determine the sensing application, which originated said signal. For example, the RSS/RSSI measurement is available effortlessly in most communication devices and can give a rough quantification of user activity, i.e., spectrum usage. The term "user" here refers more broadly to a particular application running on a device.

Some embodiments of the present disclosure may be used for applications such as home surveillance or home appliances or entertainment.

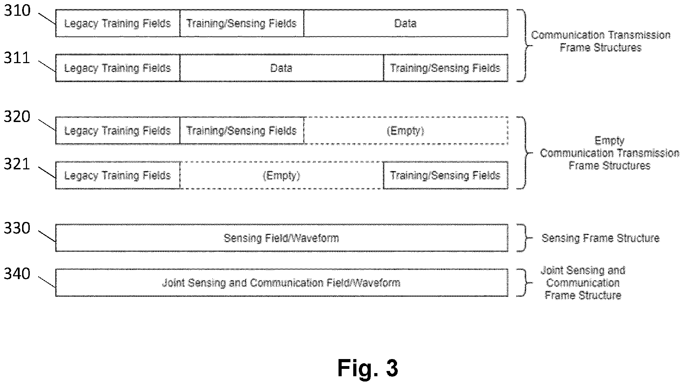

Different sensing applications may require different characteristics of the sensing signal. Some characteristics of the signal are, for example, bandwidth (BW), sensing duration, sensing start time, sensing end time, waveform, periodicity, carrier frequency, power, beam width, beam sweep rate, training sequences, pilot placement, or the like. Exemplary frame structures such as communication transmission frame structures 310, 311, empty communication frame structures 320, 321, sensing frame structures 330 and joint sensing and communication frame structures 340 are shown in **Fig. 3.**

There may be numerous communicating devices in all frequency bands. To summarize, the sensing elements and example parameters for an exemplary scenario may be as listed below:

(Mobile) Autonomous Vehicles:

    o Single transceiver

    o Frequency-Modulated Continuous Wave (FMCW) radar waveform

    o Frequency = 6 GHz

    o Bandwidth (BW) = 40 MHz

    o Periodicity = 100 pkts/s

(Stationary) Roadside Unit:

    o Single transceiver

    o FMCW radar waveform

o Frequency = 60 GHz

o BW = 1 GHz

o Periodicity = 100 pkts/s

Home Monitoring:

o 2 APs and 5 sensing/responding nodes

o Wi-Fi Physical-layer Protocol Data Unit (PPDU) frame format

o Frequency = 2.4 GHz

o BW = 20 MHz

o Periodicity = 100 pkts/s

Sleep Monitoring

o 1 transmitter and 1 receiver

o Wi-Fi PPDU

o Frequency = 60 GHz

o BW = 20 MHz

o Periodicity = 10 pkts/s

Gesture Recognition

o 1 APs and 5 sensing/responding nodes

o FMCW radar waveform

o Frequency = 60 GHz

o BW = 120 MHz

o Periodicity = 100 pkts/s

As can be seen in the above-mentioned examples, there are one or more features, which enable distinction between the applications. It is noted that the above example is fictional, and that the measurement values may vary. It is noted that these five features (number of transmitters and/or receivers, frame structure / waveform, carrier frequency, bandwidth, and periodicity) are only exemplary here. In general, depending on the desired resolution for the sensing application identification, one or more of these five features and/or any other feature capable of distinguishing (or contributing to the distinction) between sensing applications may be used. In exemplary and non-limiting implementations, the features may be required as mentioned above.

*Identification of sensing signals*

Signal characteristics and or sensing applications may be identified based on (blind signal analysis) BSA techniques and/or using predefined tags and/or a set of rules or the like.

Features of a signal out of the existing sensing signals may be identified by machine learning (ML) algorithms.

A ML-based approach may include two stages, which are referred to as training and testing. In the training stage, a dataset may be collected, and the ML model may be configured and trained. Then, in the testing stage, the features of existing sensing signals may be learned. These stages are detailed below.

For example, instead or in combination with the trained (e.g. ML / DL) module, other kind of methods such as statistical methods or deterministic methods may be employed for the estimation. For example, if it is observed that a signal is repeating periodically, ML or DL methods may not be necessary to detect presence of such sensing signal. It can be determined deterministically whether sensing is taking place or not. In a blind signal analysis (BSA) a received signal may be analyzed regarding its characteristics such as frequency, bandwidth, periodicity or the like. A blind signal analysis may take into account, for example, time domain related features such as received signal strength indication, complementary cumulative distribution function (CCDF), peak to average power ratio (PAPR), duty cycle, frame/burst length. A blind signal analysis may further take into account, for example, frequency domain related features such as bandwidth or carrier frequency. Further characteristics used in a BSA may be cyclostationarity-based features of the signal such as spectral correlation and cyclic features, statistical properties such as autocorrelation function properties, variance, mean, cumulants, and moments (2nd, 3rd, etc.) or multi-carrier parameters of the signal in the time domain (cyclic prefix (CP) duration, symbol duration) and the frequency domain (number of subcarriers, subcarrier spacing). Characteristics used in BSA may further include chip rates, symbol rates, the angle of arrival, a distinction between single-carrier or multi-carrier, a distinction between spread spectrum or narrowband, a hopping sequence or a type of modulation and its order.

Similarly, for sensing application identification, given a predefined set of features and their values for particular applications, identification may be performed. Still further, where sensing applications use specific header information for detecting network types, this or other header information may be detected and used deterministically to determine the identification of an application. There may be the drawback of defining the parameters (features and their values) and application sets for each environment. Thus, depending on the deployment scenario, trained modules may provide better results, for example in more complex scenarios, where deterministic or stochastic distinction is difficult or complex.

Identification or prediction may be made with MAC Layer Protocols or PHY Layer (like with BSA methods), or using some tags (like coding), identification or prediction may be made in Network Layer or even maybe in upper layers of the Open Systems Interconnection (OSI) model. Also, there may be no need to identify applications. Application identification may not be enough to understand signal characteristics since the environment characteristics may be changed and devices that receive the signal may be different. It may be impossible to have a complete list for all sensing applications. Thus, applications themselves or applications and environments may be grouped/classified based on their similarities, or requirements of the application may be determined by the request of the corresponding wireless system in the setup phase.

*Chirps as sensing signals*

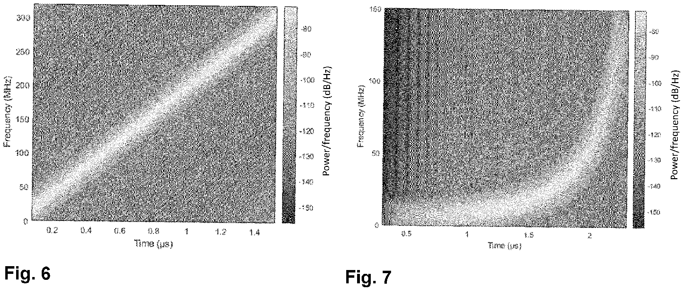

A chirp is a signal in which the frequency increases (up-chirp) or decreases (down-chirp) with time. For example, such a change in frequency may be linear or non-linear with time. The frequency-time relation of a linear frequency modulated (LFM) chirp is shown exemplarily in **Fig. 6.** A non-linear frequency modulated (NL-FM) chirp includes a change in frequency that is, for example, quadratic, exponential, logarithmic, hyperbolic or the like. An exemplary frequency-time relation of a hyperbolic frequency modulated (HFM) chirp is shown in **Fig. 7.**

In a sensing signal, where only LFM chirps are employed for sensing there are certain limitations. For example, the LFM chirp signal undergoes the problem of range-Doppler coupling, which may yield displacement in the estimation of the range of a target from its actual position due to the relative velocity of the object. Such errors in the range calculation can lead to erroneous target tracking. Moreover, radar matched filter output of linear chirps typically yields high sidelobes, typically in an order of -13db. Windowing is used to suppress these high sidelobes. However, windowing may degrade the signal-to-noise-ratio (SNR) by 1-2 db.

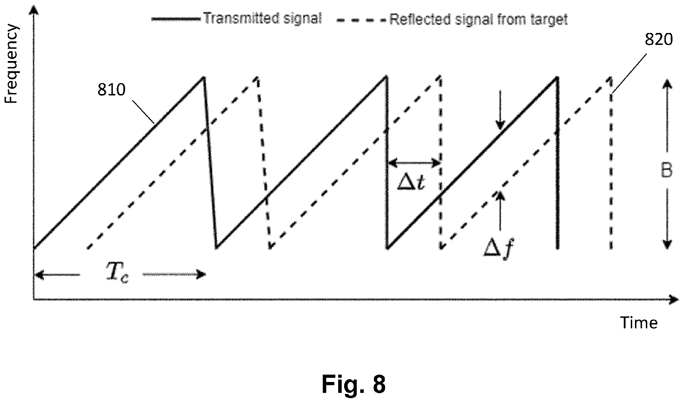

**Fig. 8** demonstrates an exemplary time-frequency relation of a transmitted LFM chirp 810 and a received LFM chirp 820 that is reflected off the target. The time difference between the two chirps is denoted by $\Delta t$. Moreover, at a given time t, the difference in received and transmitted frequency is given by $\Delta f$, which is also called beat frequency and is given by $f_{beat} = f_{received} - f_{transmitted}$. The beat frequency is related to time delay and rate of change of frequency and is used to determine the range of the target. In case of a moving target, Doppler shift is also added to the beat frequency in addition to the delay. Given that $f_{beat} = \dfrac{B\Delta t}{T_c}$, wherein $B$ denotes the sweep frequency range of the chirp, the range of the object can be found as,

$$R = \frac{cT_c f_{beat}}{2B}.$$

A range-Doppler processing of a LFM chirp includes the process of dechirping where the received signal is mixed with the transmitted signal to get the beat signal. Afterwards, fast Fourier transform (FFT) is applied to the beat signal to obtain a range plot. Additionally, a two-dimensional fast Fourier transform (2D-FFT) can be applied to the beat frequency to obtain a range-velocity map.

*Frequency Modulated Continuous Wave (FMCW) chirp*

Range and Doppler estimation of a moving target for the radar sensing systems may be performed using a Frequency Modulated Continuous Wave (FMCW) chirp. The FMCW waveform is suitable for a simultaneous range-Doppler estimation by transmitting a signal that sweeps a particular bandwidth within a specified time interval. The frequency of the signal while it sweeps a particular bandwidth increases linearly with time. After interaction with the moving target a delayed replica of the transmitted signal is received as illustrated in Fig. 8. As mentioned above, the duration by which the transmitted signal is delayed is represented by $\Delta t$, whereas the difference between the transmitted and received frequency is given by $f_{beat}$ i.e. beat frequency ($f_{beat} = f_{received} - f_{transmitted}$). The time delay and rate of change of frequency is dependent on the beat frequency and is used to estimate the range of the target. However, in case of a moving target, there is an additional Doppler shift, which is added to the beat frequency.

At the receiver, the received signal is mixed with the transmitted signal to get the beat signal through the process called dechirping. Fast Fourier Transform (FFT) may be applied to the beat signal and the result is mapped to the distance of the target. Additionally, a 2D-FFT may be applied to the received signal to obtain the range-velocity map of a target.

For integrated sensing and communication (ISAC) applications, data transmission mechanisms may be incorporated into FMCW waveform-based sensing systems. For example, data may be encoded into the triangular chirp, where the up-chirp or the increasing slope of FMCW in the time-frequency plane may represent the bit '1'. Moreover, the down-chirp or decreasing slope of the chirp may be encoded as '0'. Alternatively, the bits may be assigned vice versa, i.e. the increasing slope may be assigned to '0' and the decreasing slope may be assigned to '1'. In chirp spread spectrum (CSS) systems, a large bandwidth is used for information modulation, which may negatively impact the spectral efficiency and compromises the high multipath resolution capability of chirps. Additionally, the use of multiple chirps within a given bandwidth and time duration may lead to interference issues thereby making chirp suitable for low data rate and reliable communication systems. Therefore, conventional FMCW chirps and triangular chirps suffer from low data throughput in ISAC systems.

*Range-Doppler coupling in FMCW chirp*

One of the issues that FMCW chirps encounter is the issue of range-Doppler coupling. The root cause for the issue of range-Doppler coupling goes back to the parameterization of a chirp signal. The sweep duration of a chirp is calculated based on the time required for the signal to travel the maximum unambiguous range. Generally, the sweep time for an FMCW radar system may be considered as five to six times the round trip time. Moreover, an FMCW signal occupies a large bandwidth and choosing a sampling rate twice the bandwidth is impractical and it stresses the capability of analog-to-digital (A/D) converters. Consequently, a lower sampling rate may be selected. As FMCW radars calculate range and Doppler from the beat frequency corresponding to maximum range and Doppler frequency; therefore, sampling rate may be selected to be twice the beat frequency.

The range of the target depends on the beat frequency, therefore an accurate estimation of beat frequency is required for precise range estimation. However, in case of a mobile target, the presence of Doppler shift alters the beat frequency which leads to a biased range estimation giving rise to the issue of range-Doppler coupling. It is worth mentioning here that fast chirps undergo insignificant range-Doppler coupling. Here, fast chirps refer to a FMCW signal that sweeps a large bandwidth in a short period of time. As mentioned above, the sweep duration should be five to six times the maximum unambiguous range, which is practically a short time duration. For instance, for a distance of 200 meters the sweep duration should be approximately 7 microseconds. Hence sweeping a large bandwidth (depends on the range resolution) within 7 microseconds is impractical and has hardware limitations. Therefore, the time duration is extended to a practical limit, which makes the range-Doppler issue more pronounced.

*Ghost Targets*

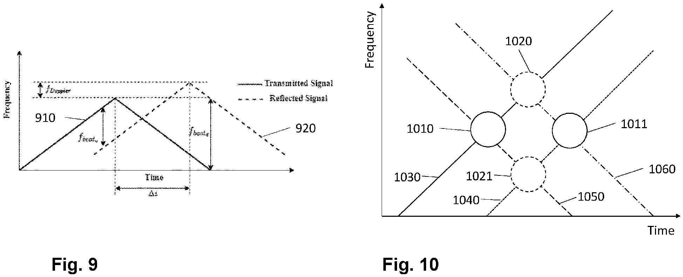

A potential way to reduce range-Doppler ambiguity is through the use of triangular chirps. A single triangular chirp includes two identical sweeps but in opposite directions. The presence of Doppler shift effects the triangular chirp differently in up and down sweeps which is demonstrated in Fig. 9. Fig. 9 illustrates a transmitted triangular chirp 910 in a time-frequency diagram, as well as a reflected triangular chirp 920. Hence, a single target corresponds to two different beat frequencies in up direction $f_{beat_u}$ and down direction $f_{beat_d}$. Therefore, through the combination of these two beat frequencies the effect of range-Doppler coupling may be averaged out and a more accurate range may be obtained. However, triangular chirps exhibit ambiguities in the multi-target scenario.

For instance, in the case of two targets, there would be two beat frequencies in the up sweep and two beat frequencies in the down sweep. Since each pair of beat frequencies corresponds to a target, in this example, there are four different possible pairs of beat frequencies out of which only two pairs correspond to real targets and the remaining two pairs lead to un-realistic targets, which are also referred to as ghost targets. The phenomenon of the generation of ghost targets is illustrated in **Fig. 10.**

In the example of Fig. 10, a first target 1010 causes a reflection of the up-sweep 1030 and a reflection of the down-sweep 1050. Analogously the second target 1011 causes a reflection of the up-sweep 1040 and a reflection of the down-sweep 1060. However, a receiver may interpret that a potential target, i.e. a first ghost target 1020, caused a reflection of the up-sweep 1030 and a reflection of the down-sweep 1060 and another potential target, i.e. a second ghost target 1021, caused a reflection of the up-sweep 1040 and a reflection of the down-sweep 1050.

*Adaptive multiple frequency shift keying (MFSK) waveform*

As mentioned above, in ISAC systems, for example, range-Doppler coupling, ghost targets and/or limited data throughput may play a role. Thus, it may be desirable to use a waveform for ISAC systems, which reduces and/or avoids one or more of said issues.

Such an adaptive MFSK waveform may result in throughput, reliability and coverage enhancement for future wireless networks both at sub-6GHz and higher frequency bands including millimeter-wave (mmwave) and terahertz (THz) bands. Additionally, secure communication and sensing prototypes may be designed by altering the adaptive parameters of the adaptive MFSK waveform based on security requirements.

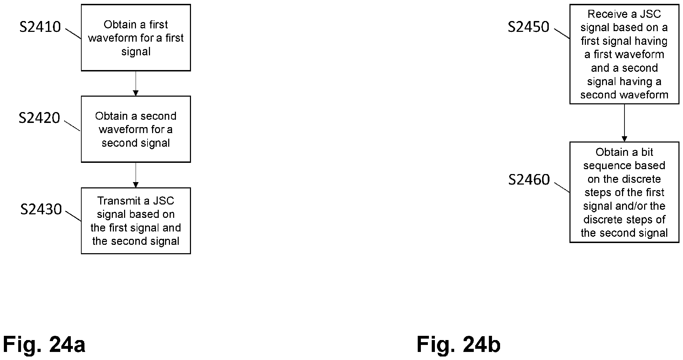

In the following, a method for transmitting a joint sensing and communication, JSC, signal is explained. The method may include a generating of said JSC signal before transmitting said signal. The steps of the method are exemplarily illustrated in the flowchart of **Fig. 24a.**

Such a generating of the JSC signal includes obtaining S2410 of a first waveform for a first signal. The first waveform includes two or more discrete steps of a chirp in a first frequency range.

The frequency of the chirp in the first frequency range may increasing or decreasing monotonously. Each step of the discrete steps of the first waveform has a constant frequency over its duration. In other words, a discrete step has a constant frequency over a (predetermined) time interval from a time $t_1$ to a time $t_2$, with $t_2 > t_1$. The frequency of the discrete step may correspond to the frequency of the chirp at a predefined time point $t$ within said time duration, $t_1 \leq t \leq t_2$. The predefined time point may be, for example, at the start of the time interval, i.e. $t = t_1$, at the end of the time interval, i.e. $t = t_2$, or in-between the endpoints of said interval, $t_1 \leq t \leq t_2$.

Such a chirp may be for example a linear chirp or a non-linear chirp, the non-linear chirp including a change in frequency that is, for example, quadratic, exponential, logarithmic, hyperbolic or the like. More details regarding chirps are explained above in section *Chirps as sensing signals.*

For example, the discrete steps of the chirp in the first frequency range may be based on a set of parameters including a starting frequency, a step duration, a step frequency and a sweep bandwidth. In other words, said discrete steps may be parametrized by one or more of a starting frequency, a step duration, a step frequency and a sweep bandwidth. The starting frequency may correspond to a lower bound of the first frequency range for a monotonously increasing chirp. The starting frequency may correspond to an upper bound of the first frequency range for a monotonously decreasing chirp.

A first step out of the discrete steps of the first waveform has a frequency different from a frequency of a second step out of the discrete steps of the first waveform. The frequency of the first step and the frequency of a second step directly subsequent in time may differ by the step frequency.

The sweep bandwidth may correspond to the range of the first frequency range. For a linear chirp, the step frequency may be constant over time. For a non-linear chirp the step frequency may increase and/or decrease over time.

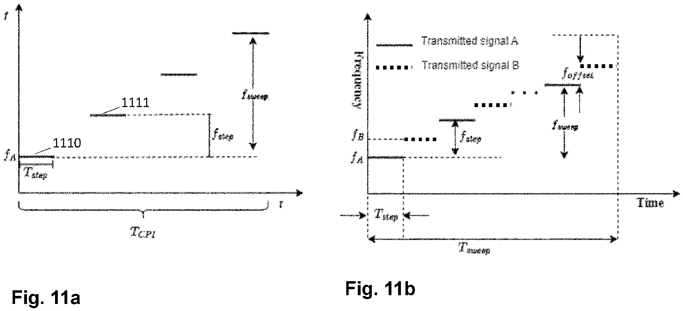

**Fig. 11a** exemplarily illustrates such a time-frequency relation for an exemplary first waveform. In the example of Fig. 11, the chirp is a linear chirp, thus, each pair of subsequent discrete steps 1110 and 1111 differs in frequency by the step frequency $f_{step}$. The discrete steps sweep a bandwidth $f_{sweep}$ in a sweep time $T_{CPI}$. The chirp starts at a discrete step 1110 having a start frequency $f_A$.

For example, the first waveform may be expressed as

$$S_A = \exp\left[j2\pi \left(f_A + m f_{step}\right)t + \varphi_{1m}\right], \qquad t \in \left[2m T_{step}, (2m+1)T_{step}\right]$$

Where, $\varphi_{1m}$ represents a random initial phase with the parameter m being a non-negative integer, $m = 0, 1, ..., N-1$. The parameter N may be obtained based on the sweep bandwidth and the step frequency, $f_{sweep} = (N-1)f_{step}$. However, the present invention is not limited to this exemplary first waveform.

As indicated above, the chirp in the first frequency range may be a linear chirp. The frequency of the discrete steps of a linear chirp of the first waveform may increase or decrease linear with time.

Moreover, a second waveform for a second signal is obtained S2420. In particular, the second waveform includes two or more discrete steps of a chirp in a second frequency range.

The frequency of the chirp in the second frequency range may increasing or decreasing monotonously. Analogously as for the first waveform, each step of the discrete steps of the second waveform has a constant frequency over its duration.

Such a chirp may be for example a linear chirp or a non-linear chirp, the non-linear chirp including a change in frequency that is, for example, quadratic, exponential, logarithmic, hyperbolic or the like. More details regarding chirps are explained above in section *Chirps as sensing signals.*

For example, the discrete steps of the chirp in the second frequency range may be based on a set of parameters including a second starting frequency, a second step duration, a second step frequency and a second sweep bandwidth. Said parameters may have a same value as the respective corresponding parameters of the first waveform or may have different values. In other words, said discrete steps of the second waveform may be parametrized by one or more of a second starting frequency, a second step duration, a second step frequency and a second sweep bandwidth. The second starting frequency may correspond to a lower bound of the second frequency range for a monotonously increasing chirp. The second starting frequency may correspond to an upper bound of the second frequency range for a monotonously decreasing chirp.

A first step out of the discrete steps of the second waveform has a frequency different from a frequency of a second step out of the discrete steps of the second waveform. The frequency of the first step of the second waveform and the frequency of a second step of the second waveform, directly subsequent in time to the first step, may differ by the second step frequency.

The sweep bandwidth may correspond to the range of the second frequency range. For a linear chirp, the step frequency may be constant over time. For a non-linear chirp the step frequency may increase and/or decrease over time.

For example, the chirp of the second waveform may be a linear chirp; thus, each pair of subsequent discrete steps differs in frequency by a step frequency $f_{step}$. The discrete steps sweep a bandwidth $f_{sweep}$ in a sweep time $T_{CPI}$. The chirp starts at a start frequency $f_B$.

For example, the first waveform may be expressed as

$$S_B = \exp\left[j2\pi\left(f_B + mf_{step}\right)t + \varphi_{2m}\right], \qquad t \in \left[(2m+1)T_{step}, (2m+2)T_{step}\right]$$

Where, $\varphi_{2m}$ represents a random initial phase with the parameter m being a non-negative integer, $m = 0, 1, ..., N-1$. The parameter N may be obtained based on the sweep bandwidth and the step frequency, $f_{sweep} = (N-1)f_{step}$. However, the present invention is not limited to this exemplary second waveform.

As indicated above, the chirp in the second frequency range may be a linear chirp. The frequency of the discrete steps of a linear chirp of the second waveform may increase or decrease linear with time.

A JSC signal is transmitted S2430, which is based on the first signal having the first waveform and the second signal having the second waveform. In other words, a JSC signal may be generated based on the first signal having the first waveform and the second signal having the second waveform. Said transmitted JSC signal may be a first JSC signal.

Such a JSC signal includes steps, wherein each step of the JSC signal includes one step out of the discrete steps of the first signal having the first waveform and one step out of the discrete steps of the second signal having the second waveform. The one step out of the discrete steps of the first signal having the first waveform and the one step out of the discrete steps of the second signal having the second waveform within a step of the JSC signal may be simultaneously in time. In other words, a step duration of the JSC signal may have a same duration as the longer step duration out of the step of the first signal or the step of the second signal. If both, the first signal and the second signal have a same step duration $T_{step}$, the step duration of the JSC signal equals said same step duration $T_{step}$ in the case of simultaneous steps of the first and the second signal.

The one step out of the discrete steps of the first signal having the first waveform and the one step out of the discrete steps of the second signal having the second waveform within a step of the JSC signal may be sequentially in time. In other words, a step duration of the JSC signal may have a step duration that is the sum of the step duration of the step of the first signal and the step duration of the step of the second signal.

The one step out of the discrete steps of the first signal having the first waveform and the one step out of the discrete steps of the second signal having the second waveform within a step of the JSC signal may have different frequencies, which differ by an offset $f_{offset}$.

**Fig. 11b** exemplarily illustrates such a JSC signal in a time-frequency diagram including a first signal "transmitted signal A" and a second signal "transmitted signal B". In the example of Fig. 11b, the first signal is based on a linear chirp. Moreover, the second signal according to Fig. 11b is based on a linear chirp. In this exemplary implementation, the first signal and the second signal each have a same step frequency $f_{step}$, a same step duration $T_{step}$, and a same sweep bandwidth $f_{sweep}$. The frequency of the step of the first signal differs from the frequency of the step of the second signal within a same JSC signal step by an offset $f_{offset}$. Moreover, the first signal "transmitted signal A" has a starting frequency $f_A$. The second signal "transmitted signal B" has a starting frequency $f_B$. The starting frequency of the first signal differs from the starting frequency of the second signal by the offset, i.e. $|f_A - f_B| = f_{offset}$. Moreover, the exemplary implementation in Fig. 11b illustrates a step duration of $2T_{step}$ for the JSC signal, wherein one step of the JSC signal includes one step out of the discrete steps of the first signal and one step out of the discrete steps of the second signal in a sequential order in time. However, the present invention is not limited to the exemplary implementation in Fig. 11b.

As illustrated in Fig. 11b, an MFSK waveform includes two discrete linear frequency modulated chirps given by *Transmit signal A* and *Transmit signal B.* Their frequencies may increase linearly with time. Both of the chirps may have same time duration and sweep bandwidth. *Transmit signal A* starts from the frequency $f_A$ and *Transmit signal B* starts from $f_B$. The difference between the two intertwined signals $f_{offset}$ may be very small as compared to the carrier frequency, hence the beat frequency $f_{beat}$ is not affected by this frequency shift parameter of the waveform. Therefore, it may be inferred that with MFSK, which is a discretized intertwined version of a linear chirps, the beat frequency $f_{beat}$ is measured twice for each target. The received signal processing of both transmit signal A and B provides the beat frequency at the same spectral location; however, transmit signal A and B exhibit a phase difference which determines range and velocity accuracy. An MFSK waveform may decouple the distance and speed of targets and may avoid the issue of multiple target-pairing, which is dominant, for example, in case of triangular chirps. Additionally, each step of such a MFSK waveform represents a data symbol, which makes this waveform suitable for integrated sensing and communication applications. The variation of $f_{offset}$ and $T_{step}$ leads to a flexible MFSK waveform structure that performs well in a diverse set of scenarios. The transmit signals A and B (i.e. the first and the second signal) within an MFSK waveform are transmitted in an intertwined manner (ABABAB...).

In the JSC signal, a discrete step out of the first signal or a discrete step out of the second signal is associated with at least one bit. For example, the frequency of a discrete step out of the first signal may be associated with a bit and/or a bit sequence. For example, the amplitude of a discrete step may be modulated based on a bit or a bit sequence to be transmitted.

Such a JSC signal has a multiple frequency shift keying (MFSK) waveform. MFSK may be seen as a combination of two overlapped FMCW chirps with a fixed frequency offset $f_{offset}$. The carrier frequencies of the two chirps starts from $f_A$ and $f_B$ respectively. In the above-described MFSK waveform the two FMCW chirps sweep the entire sweep bandwidth in discrete steps. Within each step, two tones are present; therefore, it may be seen also as frequency shift keying (FSK) waveform.

As already indicated above, the discrete steps in the first frequency range may be based on a first set of predetermined parameters. The first set of predetermined parameters may include a first starting frequency, a first step duration, a first step frequency and a first sweep bandwidth. For example, a parameter in the first set of predetermined parameters may be indicated independent from other parameters included in the first set of predetermined parameters and/or the second set of predetermined parameters. For example, a parameter in the first set of predetermined parameters may be indicated depending on one or more other parameters included in the first set of predetermined parameters and/or the second set of predetermined parameters.

Moreover, the discrete steps in the second frequency range may be based on a second set of predetermined parameters. The second set of predetermined parameters may include a second starting frequency, a second step duration, a second step frequency and a second sweep bandwidth. The second step duration may be equal to the first step duration. The second step frequency may be equal to the first step frequency. The second sweep bandwidth may be equal to the first sweep bandwidth. The second starting frequency may be indicated as a value independent of the first set of parameters. Alternatively, the second starting frequency may be indicated as a value dependent on the first set of parameters. In other words, the second starting frequency may be based on the first starting frequency and an offset.

For example, a parameter in the second set of predetermined parameters may be indicated independent from other parameters included in the first set of predetermined parameters and/or the second set of predetermined parameters. For example, a parameter in the second set of predetermined parameters may be indicated depending on one or more other parameters included in the first set of predetermined parameters and/or the second set of predetermined parameters.

The transmitted JSC signal may be a first JSC signal. A measurement result may be obtained based on the first JSC signal. Such a measurement result may include one or more of a range and a velocity. For example, such a measurement result may be obtained based on a reflection of the first JSC signal. In other words, the wireless device that transmitted the first JSC signal may receive a reflection of said first JSC device. Based on the reflection a measurement may be performed thereby obtaining a measurement result.

For example, such a measurement result may be obtained by receiving said measurement result from another wireless device. In other words, a second wireless device may receive the first JSC signal transmitted by a first wireless device. Moreover, the second wireless device may perform a measurement to obtain a measurement result. The second wireless device may transmit a result of the measurement to the first wireless device.

MFSK may be viewed as a combination of two overlapped linear FMCW chirps with a fixed frequency offset $f_{offset}$. In an exemplary implementation for the obtaining of a measurement result, the carrier frequencies of the two chirps starts from $f_A$ and $f_B$ respectively. The two chirps have same step duration $T_{step}$, stepping frequency $f_{step}$, and the same sweep bandwidth $f_{sweep}$. In the exemplary MFSK waveform the two FMCW chirps sweep the entire bandwidth in discrete steps. Within each step, two tones are present; therefore, it is named as frequency shift keying (FSK) waveform. Hence, there are two sets of measurements for range and Doppler calculations, one from FMCW waveform and the other from FSK. Combining these two waveforms may reduce and/or eliminate the issue of range-Doppler coupling regardless of the number of targets. The transmitted signal A and transmitted signal B of the exemplary MFSK waveform may be expressed as

$$S_A = \exp\left[j2\pi\left(f_A + mf_{step}\right)t + \varphi_{1m}\right], \qquad t \in \left[2mT_{step}, (2m+1)T_{step}\right]$$

$$S_B = \exp\left[j2\pi\left(f_B + mf_{step}\right)t + \varphi_{2m}\right], \qquad t \in \left[(2m+1)T_{step}, (2m+2)T_{step}\right]$$

Where, $\varphi_{1m}$ and $\varphi_{2m}$ are the random initial phases with $m = 0, 1, ..., N - 1$. The echo of the transmitted signals A and B are equated as,

$$R_A = \exp\{j2\pi\left(f_A + mf_{step}\right)[t - \tau(t)] + \varphi_{1m}\}$$

$$R_B = \exp\{j2\pi\left(f_B + mf_{step}\right)[t - \tau(t)] + \varphi_{2m}\}$$

Here, $\tau(t) = \tau_0 - kt = \frac{2R}{c} - \frac{2V}{c}t$, where $R$ and $V$ correspond to the range and velocity of the target respectively. The beat signals for the transmitted signals A and B may be obtained after down-converting which are represented by $F_A$ and $F_B$ and are represented as,

$$F_A = \exp\{j2\pi[2mT_{step}(f_d - \mu\tau_0) + f_dT_{step} - f_A\tau_0]\}$$

$$F_B = \exp\{j2\pi[2mT_{step}(f_d - \mu\tau_0) + 2f_dT_{step} - f_B\tau_0]\}$$

Where $= \frac{f_{sweep}}{T_{chirp}}$, given that $f_{sweep} = (N-1)f_{step}$ and $T_{chirp} = 2NT_{step}$. FFT transform is applied to the two beat signals A and B, and the spectrum peaks of the target appear at the same position, which indicates that the two beat signals have the same frequency component which is

$$f_{beat} = \frac{2}{\lambda}V - \frac{2\mu}{c}R$$

Moreover, the phase of the two spectrum peaks at a target position are represented by $\varphi_A$ and $\varphi_B$, and their difference is given by,

$$\frac{\Delta\varphi}{2\pi} = \frac{\varphi_B - \varphi_A}{2\pi} = \frac{2T_{step}}{\lambda}V - \frac{2f_{shift}}{c}R$$

From the phase difference and the beat frequency, range R and velocity V may be calculated.

Based on such a measurement result, a third set of parameters may be obtained. Such an obtaining may include adapting one or more parameters of the first waveform based on the obtained measurement result.

For example, a parameter in the third set of parameters may be indicated independent from other parameters included in the first set of predetermined parameters and/or the second set of predetermined parameters. For example, a parameter in the third set of parameters may be indicated depending on one or more other parameters included in the first set of predetermined parameters and/or the second set of predetermined parameters.

Moreover, based on the measurement result, a fourth set of parameters may be obtained. Such an obtaining may include adapting one or more parameters of the second waveform based on the obtained measurement result.

For example, a parameter in the fourth set of parameters may be indicated independent from other parameters included in the first set of predetermined parameters and/or the second set of predetermined parameters and/or the third set of predetermined parameters. For example, a parameter in the fourth set of parameters may be indicated depending on one or more other parameters included in the first set of predetermined parameters and/or the second set of predetermined parameters and/or the third set of parameters.

In a first example, in case the first wireless device, which transmits the first JSC signal, performs a measurement, the first wireless device may determine the third set of parameters and/or the fourth set of parameters. The first wireless device may indicate the third set of parameters and/or the fourth set of parameters to a second wireless device, which receives the first JSC signal.

In a second example, in case the second wireless device performs a measurement, the second wireless device may report the measurement result to the first wireless device. Based on the reported measurement results, the first wireless device may determine the third set of parameters and/or the fourth set of parameters. The first wireless device may indicate the third set of parameters and/or the fourth set of parameters to a second wireless device, which receives the first JSC signal.

In a third example, in case the second wireless device performs a measurement, the second wireless device may determine the third set of parameters and/or the fourth set of parameters based on the reported measurement results. The second wireless device may indicate the third set of parameters and/or the fourth set of parameters to the first wireless device.

Such an adaption of one or more parameters of a respective waveform includes adapting one or more of

- the first starting frequency,
- the second starting frequency,
- the step duration,
- the step frequency, and
- the sweep bandwidth.

The adaption of the first starting frequency and/or the second staring frequency may include adapting an offset $f_{offset}$. Such an offset corresponds to a difference between the first starting frequency and the second starting frequency.

Moreover, a second JSC signal may be transmitted. The second JSC signal may be based on the third set of parameters for the first waveform and/or the fourth set of parameters for the second waveform.

In other words, the second JSC signal is based on one or more adapted parameters of the first waveform and/or the second waveform when being compared to the first JSC signal.

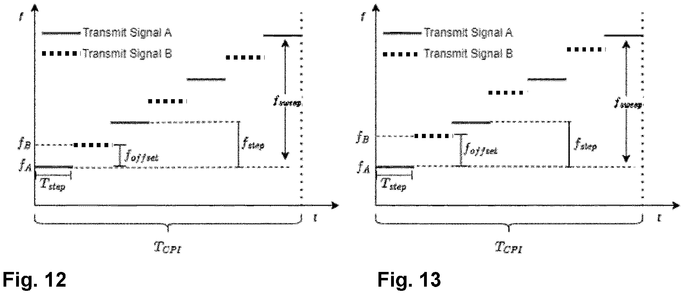

Although a MFSK waveform may be suitable to extract the sensing parameters such as range and Doppler in a decoupled manner and may circumvent the issue of multiple-target pairing, it may undergo range and velocity detection error in case of a low signal to noise ratio (SNR). If the offset frequency $f_{offset}$ is increased between the first JSC signal and the second JSC signal, the range detection errors may be reduced and a precise range measurement may be obtained. However, for long range and/or high speed scenarios range and velocity ambiguities may appear even with a large $f_{offset}$. Therefore, a large $f_{offset}$ may be considered for the short range, whereas a small $f_{offset}$ is considered for long range applications. The selection of $f_{offset}$ may be based on maximum unambiguous range. An exemplary waveform for short range applications is illustrated in a time-frequency diagram in **Fig. 12** and an exemplary waveform for long range applications is shown in a time-frequency diagram in **Fig. 13.** The step duration $T_{step}$ has not been adapted in the exemplary implementations of Figs. 12 and 13.

The exemplary JSC signal in Fig. 12, which is suitable for long range applications, has a smaller $f_{offset}$ than the exemplary JSC signal in Fig. 13, which is suitable for short range applications.

Additionally, for high-speed applications, which may require high Doppler resolution, a large number of individual tones is to be transmitted within a specified time period. This may be achieved with a shorter step duration $T_{step}$.

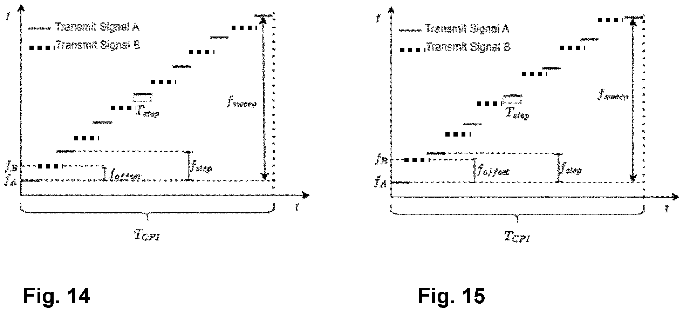

**Figs. 14 and 15** provide exemplary JSC signals illustrated in a time-frequency diagram, which are suitable for high-speed applications. Compared to the exemplary JSC signals in Figs. 12 and 13 respectively, the exemplary JSC signals in Figs. 14 and 15 have a shorter $T_{step}$.

In particular, Fig. 14 illustrates an exemplary JSC signal, which may be suitable for a short-range scenario with high Doppler resolution. Fig. 15 illustrates an exemplary JSC signal, which may be suitable for a long-range scenario with high Doppler resolution.

Fig. 15 exemplarily illustrates a waveform numerology, where a short $T_{step}$ and a larger $f_{offset}$ are selected that provide high Doppler resolution in short range scenarios. In Fig. 14, a short $T_{step}$ with a smaller $f_{offset}$ may provide high-velocity resolution measurements in long range scenarios. The coherent processing interval or time duration for both cases is the same. In radar sensing, high velocity resolution refers to the ability of the system to distinguish small changes in the velocity of moving objects.

It is to be noted that with shorter step duration, more number of distinct tones are transmitted. In other words, the number of steps are increased. With each step representing communication data, throughput may be enhanced in the scenarios requiring high velocity resolution.

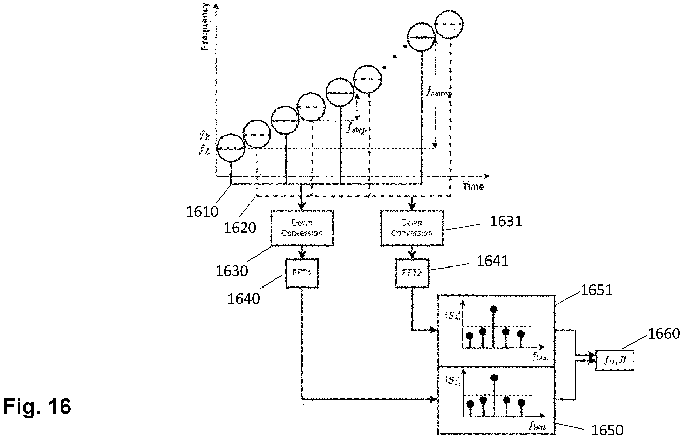

**Fig. 16** exemplarily illustrates a processing of a (received) JSC signal. As mentioned above, a MFSK waveform may be suitable to extract the sensing parameters such as range and Doppler (and thus velocity) in a decoupled manner. In the exemplary implementation according to Fig. 16, the received JSC signal, which may be, for example, any of the exemplary JSC signals according to Figs 12 to 15, or any other JSC signal described herein, may split into the first signal and the second signal. Each of the first and the second signal may be down converted 1630 and 1631, respectively. From a fast Fourier transform 1640, a first spectrum 1650 is obtained for the first signal. From a fast Fourier transform 1641, a second spectrum 1651 is obtained for the second signal. The first spectrum 1650 and the second spectrum 1651 are input to a determination 1660 of range R and/or velocity, wherein the velocity is based on a determined frequency $f_D$.

As mentioned above, in a JSC signal, communication data is transmitted jointly with a sensing signal. For the transmitted JSC signal, a discrete step out of the first signal or a discrete step out of the second signal is associated with at least one bit.

In particular, in a first exemplary implementation for associating at least one bit with a discrete step, a frequency of a discrete step out of the first waveform may be associated with a first predetermined bit sequence including one or more bits. Alternatively or in addition, a frequency of a discrete step out of the second waveform may be associated with a second predetermined bit sequence including one or more bits.

Each step of the MFSK signal may be mapped to a communication symbol. In other words, each discrete tone of the signal may be mapped to communication symbols. Such a tone to symbol mapping may be governed by a lookup table that is shared between the transmitter and receiver.

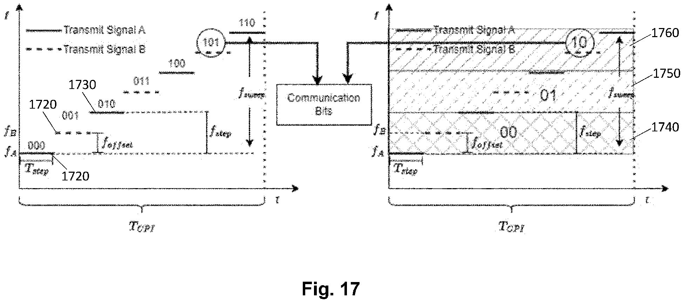

Numerous ways may be adopted to modulate data on top of an MFSK signal. Examples are illustrated in **Fig. 17.** For example, in Fig. 17 (left side) each frequency is associated with a certain number of bits, e.g. three bits. A first tone 1710 having frequency $f_A$ may be associated with 000, a second tone 1720 having frequency $f_B = f_A + f_{offset}$ may be associated with 001. A third tone 1730 having frequency $f_A + f_{step}$ may be associated with 010, and so on. Such associations may be given by a lookup table, which is shared between transmitter and receiver. For example, such a lookup table may be transmitted from the transmitting device to the receiving device. For example, such a lookup table may be transmitted from the receiving device to the transmitting device. For example, such a lookup table may be transmitted from another device to the transmitting device as well as to the receiving device.

For example, in Fig. 17 (right side) each range of frequencies may be associated with a certain number of bits, e.g. two bits. For example, a first range 1740 having a frequency between $f_A$ and $f_A + f_{step}$ may be associated with 00, a second range 1750 having a frequency between $f_A + f_{step}$ and $f_A + 2f_{step}$ may be associated with 01, and a third range 1760 having a frequency between $f_A + 2f_{step}$ and $f_A + 3f_{step}$ may be associated with 10. However, the present invention is not limited to such an exemplary association. Any other association of frequency ranges to bit sequences may be used.

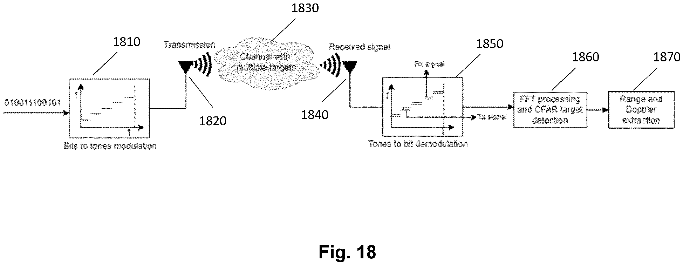

After tone to bit mapping 1810, the JSC signal is transmitted 1820 as illustrated in **Fig. 18.** The receiver may receive 1840 the JSC signal after interaction with the targets 1830. From the received signal (including discrete tones) and the lookup table, the communication bits may be extracted 1850. After that the signals A and B may be processed 1860 separately via Fourier transform and constant false alarm rate (CFAR) target detection methods. The fast Fourier transform (FFT)-output of a single target having specific range and velocity may be detected at the same position of the two processed signals. From such a processed signal, range and velocity of targets in the channel 1830 may be obtained 1870.

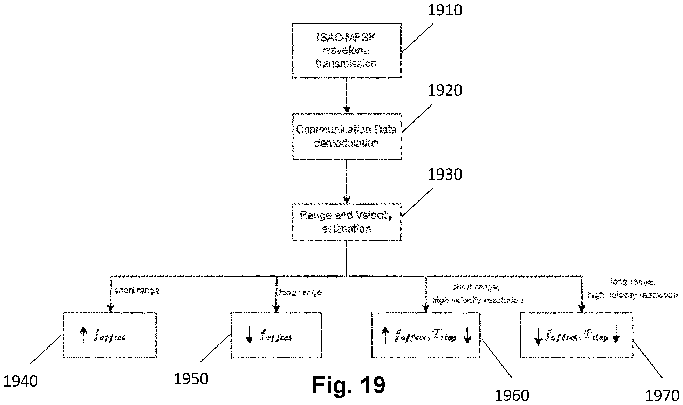

Based on the range and velocity measurements, the JSC waveform may be adapted in the next iteration. As illustrated in **Fig. 19,** a JSC waveform (signal) is transmitted 1910. After communication data demodulation 1920, range and velocity may be estimated 1930.

For short-range scenarios 1940, an adaptive MFSK waveform, as, for example, illustrated in Fig. 13, may be transmitted as a second JSC signal. In other words, a MFSK waveform may be chosen (adapted to) having a larger step frequency $f_{offset}$. For long-range scenarios 1950, an adaptive MFSK waveform, as, for example, shown in Fig. 12, may be transmitted as a second JSC signal. In other words, a MFSK waveform may be chosen (adapted to) having a smaller step frequency $f_{offset}$. In case of short range and high mobility 1960, i.e. high Doppler resolution (velocity), an adaptive MFSK waveform, as, for example, shown in Fig. 15, may be transmitted as a second JSC signal. In other words, a MFSK waveform may be chosen (adapted to) having a larger step frequency $f_{offset}$ and a shorter step duration $T_{step}$. In case of long range and high mobility, i.e. high Doppler resolution (velocity), an adaptive MFSK waveform, as, for example, shown in Fig. 14, may be transmitted as a second JSC signal. In other words, a MFSK waveform may be chosen (adapted to) having a smaller step frequency $f_{offset}$ and a shorter step duration $T_{step}$.

It is worth mentioning here, that the frequency tone to communication bits mapping for high Doppler resolution scenarios may associate more bits per symbol (tone). Within one step duration a higher number of tones is transmitted and each tone may be associated with bits.

The tone to bit mapping may be performed in the same way as described above with respect to Fig. 17.

In a second exemplary implementation for associating at least one bit with a discrete step, a first value of an amplitude of a discrete step out of the first waveform is associated with a bit of value one. Moreover, a second value of an amplitude of a discrete step out of the first waveform is associated with a bit of value zero. For each discrete step out of the second waveform, an amplitude of said step may have a same value.

The transmitting of the JSC signal includes modulating the amplitude of the discrete steps of the first signal having the first waveform according to a bit sequence, which is to be transmitted.

However, the present invention is not limited to the steps of the first signal being amplitude-modulated and the steps of the second signal not being amplitude-modulated. Alternatively, the steps of the first signal may not being amplitude-modulated and the steps of the second signal may being amplitude-modulated. Furthermore, both, the steps of the first signal and the steps of the second signal, may being amplitude-modulated. Without loss of generality, in the following the amplitude modulation is described for the first waveform (signal).

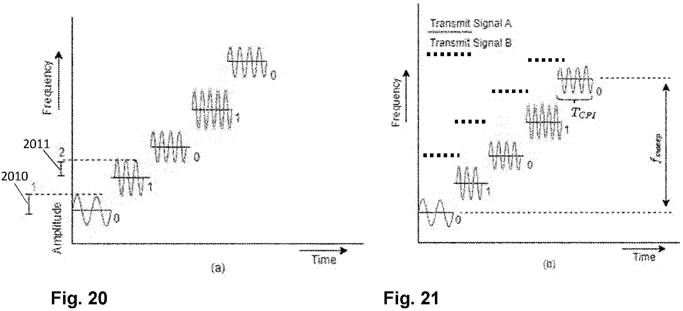

**Fig. 20** exemplarily illustrates data mapping over the steps of a signal according to the first waveform. The amplitude of the discrete tone is varied according to the incoming data bits. For bit '0' the amplitude of the tone is "amplitude 1" 2010 whereas the amplitude is "amplitude 2" 2011 in case if bit '1' is transmitted. Other than that, the step duration, step size and sweep bandwidth is same for the linearly increasing step chirp.

**Fig. 21** exemplarily illustrates a JSC signal in a time frequency plot, whose first signal is modulated in amplitude. Two intertwined chirps are transmitted in this example. The Transmit signal B, is not carrying any data information on top of it. Data modulation is performed on Transmit signal A, as explained above, also in reference to Fig. 20. Moreover, Fig. 21 illustrates one step out of the discrete steps of the first signal having the first waveform and one step out of the discrete steps of the second signal having the second waveform within a step of the JSC signal being simultaneously in time.

In the following, a method for receiving a joint sensing and communication (JSC) signal is explained. The steps of the method are exemplarily illustrated in the flowchart of **Fig. 24b**. The JSC signal may be any JSC signal having a waveform as explained above. In particular, a JSC signal is received S2450, which is based on a first signal having a first waveform and a second signal having a second waveform. The JSC signal includes steps, wherein each step of the JSC signal includes one step out of discrete steps of the first signal having the first waveform and one step out of discrete steps of the second signal having the second waveform.

The first waveform includes two or more discrete steps of a chirp in a first frequency range. The second waveform includes two or more discrete steps of a chirp in a second frequency range. In the JSC signal, a discrete step out of the first signal or a discrete step out of the second signal is associated with at least one bit. The first and the second waveform are analogous as explained in detail above for the transmitting of said JSC signal.

In particular, the frequency of the chirp in the first frequency range may increasing or decreasing monotonously. Each step of the discrete steps of the first waveform has a constant frequency over its duration. Similarly, the frequency of the chirp in the second frequency range may increasing or decreasing monotonously. Analogously as for the first waveform, each step of the discrete steps of the second waveform has a constant frequency over its duration.

Such a chirp may be for example a linear chirp or a non-linear chirp, the non-linear chirp including a change in frequency that is, for example, quadratic, exponential, logarithmic, hyperbolic or the like. For a non-linear chirp, linearization of said chirp may be performed for FFT processing in order to maintain the advantages of linear systems. For example, a nonuniform FFT processing may be performed at the receiver.

For example, the processing of the received JSC signal may be performed as explained above with respect to Fig. 16.

As indicated above, the chirp in the first frequency range may be a linear chirp. Moreover, the chirp in the second frequency range may be a linear chirp. The frequency of the discrete steps of such a linear chirp may increase or decrease linear with time.

For example, the discrete steps of the chirp in the first frequency range may be based on a set of parameters including a starting frequency, a step duration, a step frequency and a sweep bandwidth. In other words, said discrete steps may be parametrized by one or more of a starting frequency, a step duration, a step frequency and a sweep bandwidth. The starting frequency may correspond to a lower bound of the first frequency range for a monotonously increasing chirp. The starting frequency may correspond to an upper bound of the first frequency range for a monotonously decreasing chirp.

A first step out of the discrete steps of the first waveform has a frequency different from a frequency of a second step out of the discrete steps of the first waveform. The frequency of the first step and the frequency of a second step directly subsequent in time may differ by the step frequency.

The sweep bandwidth may correspond to the range of the first frequency range. For a linear chirp, the step frequency may be constant over time. For a non-linear chirp the step frequency may increase and/or decrease over time.

For example, the discrete steps of the chirp in the second frequency range may be based on a set of parameters including a second starting frequency, a second step duration, a second step frequency and a second sweep bandwidth. Said parameters may have a same value as the respective corresponding parameters of the first waveform or may have different values. In other words, said discrete steps of the second waveform may be parametrized by one or more of a second starting frequency, a second step duration, a second step frequency and a second sweep bandwidth. The second starting frequency may correspond to a lower bound of the second frequency range for a monotonously increasing chirp.

The second starting frequency may correspond to an upper bound of the second frequency range for a monotonously decreasing chirp.

In addition, exemplary implementations for a first and a second waveform as well as a JSC signal are explained above with references to Figs. 11 to 15.

Moreover, the receiving includes obtaining S2460 a bit sequence based on the discrete steps of the first signal and/or the discrete steps of the second signal.

Analogous as for the transmitting explained above, the discrete steps in the first frequency range may be based on a first set of predetermined parameters. The first set of predetermined parameters may include a first starting frequency, a first step duration, a first step frequency and a first sweep bandwidth. For example, a parameter in the first set of predetermined parameters may be indicated independent from other parameters included in the first set of predetermined parameters and/or the second set of predetermined parameters. For example, a parameter in the first set of predetermined parameters may be indicated depending on one or more other parameters included in the first set of predetermined parameters and/or the second set of predetermined parameters.

Moreover, the discrete steps in the second frequency range may be based on a second set of predetermined parameters. The second set of predetermined parameters may include a second starting frequency, a second step duration, a second step frequency and a second sweep bandwidth. The second step duration may be equal to the first step duration. The second step frequency may be equal to the first step frequency. The second sweep bandwidth may be equal to the first sweep bandwidth. The second starting frequency may be indicated as a value independent of the first set of parameters. Alternatively, the second starting frequency may be indicated as a value dependent on the first set of parameters. In other words, the second starting frequency may be based on the first starting frequency and an offset.

The received JSC signal may be a first JSC signal. A measurement result may be obtained based on the first JSC signal. Such a measurement result may include one or more of a range and a velocity. For example, such a measurement result may be obtained based on a reflection of the first JSC signal. In other words, the wireless device that transmitted the first JSC signal may receive a reflection of said first JSC device. Based on the reflection a measurement may be performed thereby obtaining a measurement result. Such a measurement result may be transmitted to a second wireless device, which received the JSC signal.

For example, such a measurement result may be obtained from the received first JSC signal from another wireless device. In other words, the receiving wireless device may receive the first JSC signal transmitted by a transmitting wireless device. Moreover, the receiving wireless device may perform a measurement to obtain a measurement result. The receiving wireless device may transmit a result of the measurement to the transmitting wireless device.

An exemplary obtaining of a measurement result including one or more of a range and a velocity is explained in detail above in the exemplary implementation for the obtaining of a measurement result.

Based on such a measurement result, a third set of parameters may be obtained. Such an obtaining may include adapting one or more parameters of the first waveform based on the obtained measurement result. Moreover, based on the measurement result, a fourth set of parameters may be obtained. Such an obtaining may include adapting one or more parameters of the second waveform based on the obtained measurement result. Details regarding the obtaining of the third and/or the fourth set of parameters are given above for the transmitting of the JSC signal. In particular, the obtaining of the third and/or the fourth set of parameters may be performed as explained in the first to third example above.

Analogous as for the transmitting of the JSC signal, such an adaption of one or more parameters of a respective waveform includes adapting one or more of

- the first starting frequency,
- the second starting frequency,
- the step duration,
- the step frequency, and
- the sweep bandwidth.

Moreover, a second JSC signal may be received. The second JSC signal may be based on the third set of parameters for the first waveform and/or the fourth set of parameters for the second waveform. In other words, the second JSC signal is based on one or more adapted parameters of the first waveform and/or the second waveform when being compared to the first JSC signal.

As mentioned, the receiving includes obtaining a bit sequence based on the discrete steps of the first signal and/or the discrete steps of the second signal.

The JSC signal may include a communication signal represented by a bit sequence, which is obtained from the discrete steps of the first signal and/or the discrete steps of the second signal.

The receiving of the JSC signal may include obtaining a first signal out of the JSC signal based on the first waveform and/or obtaining a second signal out of the JSC signal based on the second waveform.

As explained above in the first exemplary implementation for associating at least one bit with a discrete step, a frequency of a discrete step out of the first waveform may be associated with a first predetermined bit sequence including one or more bits, and/or a frequency of a discrete step out of the second waveform may be associated with a second predetermined bit sequence including one or more bits. Examples are explained above with reference to Fig. 17.

The obtaining of the bit sequence based on an association according to the first exemplary implementation is explained with reference to Fig. 18.

As explained above in the second exemplary implementation for associating at least one bit with a discrete step, the first waveform in the JSC signal may be amplitude modulated. In other words, a first value of an amplitude of a discrete step out of the first waveform is associated with a bit of value one. Moreover, a second value of an amplitude of a discrete step out of the first waveform is associated with a bit of value zero.

To obtain the bit sequence data may be demodulated from said amplitude modulation of the first signal included in the JSC signal. Such demodulating may include the obtaining of the bit sequence based on the discrete steps of the first signal.

After data demodulation from the first signal, a reconstructed first signal may be obtained based on the obtained second signal. Based on said reconstructed first signal and the second signal, a measurement of range and/or velocity may be obtained.

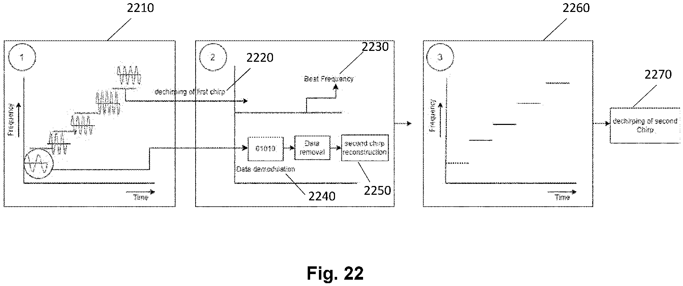

In a first exemplary implementation for demodulation and dechirping, two chirps are obtained at the receiving wireless device. This is exemplarily illustrated in **Fig. 22.** In particular, a JSC signal including the first and the second chirp is obtained 2210. In this exemplary implementation the first chirp corresponds to the second signal, which is not amplitude-modulated, and the second chirp corresponds to the first signal, which is amplitude-modulated. The sweep bandwidth, step duration and step size of the transmit signal are known at the receiver. The first chirp may be dechirped 2220 to obtain a first beat frequency 2230. Data may be demodulated 2240 and extracted from the second chirp. After data demodulation, the second chirp may be reconstructed 2250 based on the first chirp. For example, the amplitude of the second chirp may be made constant according to the first received chirp in order to obtain a reconstructed second chirp 2260. This enables to perform processing of the sensing signal without causing much performance degradation. The second chirp may be dechirped 2270 in order to obtain a second beat frequency. From the first and the second beat frequency a range and a velocity of a target may be obtained.

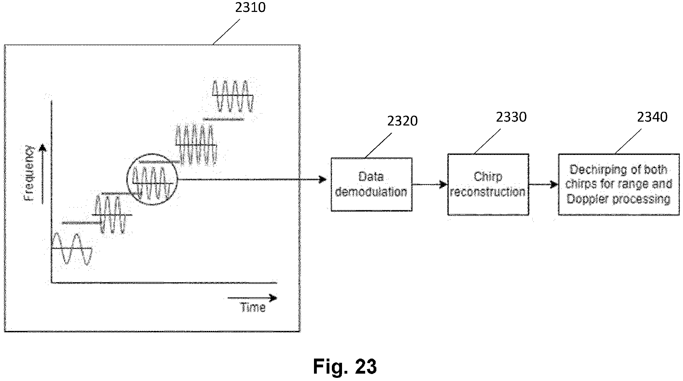

A second exemplary implementation for demodulation and dechirping is exemplarily illustrated in **Fig. 23.** A JSC signal including a first and the second chirp is obtained 2310. In this exemplary implementation the first chirp corresponds to the second signal, which is not amplitude-modulated, and the second chirp corresponds to the first signal, which is amplitude-modulated. Data may be demodulated 2320 and extracted based on the amplitude variation of the incoming second chirp. The amplitude of the second chirp may be reconstructed 2330 based on the first chirp. For example, the amplitude of the second chirp may be made constant according to the first received chirp in order to obtain a reconstructed second chirp. A combined dechirping 2340 as well as further processing may be performed for the first chirp and the second chirp in order to obtain a measurement result for a range and a velocity of a target.

*Implementations in software and hardware*

It is noted that although embodiments and examples of the present disclosure were provided in terms of a method above, the corresponding devices providing the functionality described by the methods are also provided. Moreover, it is noted that any of the steps described above may be included as code instructions in a program, which may be executed by one or more processors.

For example, a device is provided for transmitting and or receiving JSC signals. The device may comprise a processing circuitry, which is configured to perform steps according to any of the above-mentioned methods. The device may further comprise a transceiver for performing wireless reception, transmission or sensing. Alternatively to the transceiver, the processing circuitry may control an external transceiver to perform wireless reception, transmission or sensing. The processing circuity may receive signals from a transceiver and/or may transmit signals to a transceiver. In other words, the processing circuitry may instruct the transceiver to receive and/or transmit signals.

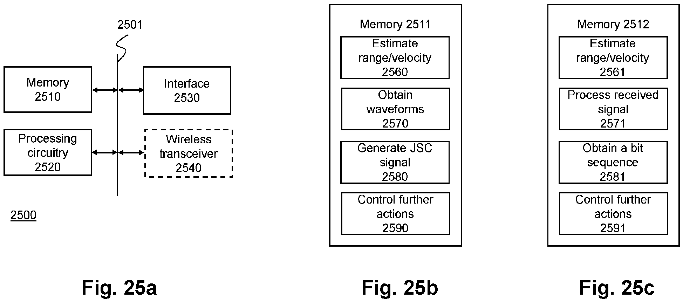

**Fig. 25a** shows an exemplary device 2500, which may implement some embodiments of the present disclosure. For example, the device may be the device for transmitting and/or receiving JSC signals. Such a device may include memory 2510, processing circuitry 2520, a wireless transceiver 2540, and possibly a user interface 2530. The device may be, for instance a (part of) a base station or a terminal/STA, or another device as mentioned above. Moreover, any of the above mentioned first, second, transmitting and/or receiving wireless devices may be implemented as exemplarily illustrated in Fig. 25a.

The memory 2510 may store the program, which may be executed by the processing circuitry 2520 to perform steps of any of the above-mentioned methods. The processing circuitry may comprise one or more processors and/or other dedicated or programmable hardware. The wireless transceiver 2540 may be configured to receive and/or transmit wireless signals. The transceiver 2540 may include also baseband processing which may detect, decode and interpret the data according to some standard or predefined convention. However, this is not necessary and devices with only sensing applications may implement only the lower one or two protocol layers. For example, the transceiver may be used to perform measurement, communicate with other devices such as base stations and/or terminals. The device 2500 may further include a user interface 2530 for displaying messages or status of the device, or the like and/or for receiving a user's input. A bus 2501 interconnects the memory, the processing circuitry, the wireless transceiver, and the user interface.

**Fig. 25b** shows an example of the memory 2511 in a wireless device 2500 for transmitting a JSC signal, including a module 2560 for estimating range and/or velocity, a module 2570 for obtaining waveforms, a module 2580 for generating a JSC signal, and a module 2590 for controlling the transceiver 2540 to adapt the wireless reception, transmission or sensing. These modules 2560-2590 may be fetched from the memory and executed by the processing circuitry 2520.

**Fig. 25c** shows an example of the memory 2512 in a wireless device 2500 for receiving a JSC signal, including a module 2561 for estimating range and/or velocity, a module 2571 for processing a received signal, a module 2581 for obtaining a bit sequence, and a module 2591 for controlling the transceiver 2540 to adapt the wireless reception, transmission or sensing. These modules 2560-2590 may be fetched from the memory and executed by the processing circuitry 2520.

The above examples are not to limit the present disclosure. There are many modifications and configurations, which may be used in addition or alternatively, as will be briefly described below.

Figs. 25b and c provide an exemplary implementation. A memory 2510 may include a subset of the described modules or additional modules to provide instructions to perform any of the methods described in the sections above.

This present disclosure can be used in any kind of device that is used for wireless sensing. For instance, health monitoring, activity classification, gesture recognition, people counting, through the wall sensing, emotion recognition, attention monitoring, keystrokes recognition, drawing in the air, imaging, step counting, speed estimation, sleep detection, traffic monitoring, smoking detection, metal detection, sign language recognition, humidity estimation, wheat moisture detection, fruit ripeness detection, sneeze sensing, etc. Besides these applications, the embodiments of the present disclosure can be used in JSC technologies. This disclosure can also be used for sensing applications to support communication applications, like obstacle tracking for beam management. Therefore, devices that can utilize this invention could be smart homes/offices/cities/factories/etc. devices, like electrical kitchen appliances, television sets, smart bus stops, smart office equipment (printers, etc.), lighting systems, WLAN and WiFi devices, etc. Other devices could be stand-alone wireless sensors, such as heart-rate monitors, motion detectors, smart watches, etc. Besides these applications, the invention can be used for military services such as enemy sensors, the existence of enemy devices and what they are sensing can be learned and some precaution can be taken. This disclosure can especially be used in network controllers and managing devices, such as APs, BSs, edge nodes, enhanced nodes, etc. for technologies such as CR, reconfigurable radio systems, etc.

The methodologies described herein may be implemented by various means depending upon the application. For example, these methodologies may be implemented in hardware, operation system, firmware, software, or any combination of two or all of them. For a hardware implementation, any processing circuitry 2520 may be used, which may include one or more processors. For example, the hardware may include one or more of application specific integrated circuits (ASICs), digital signal processors (DSPs), digital signal processing devices (DSPDs), programmable logic devices (PLDs), field programmable gate arrays (FPGAs), processors, controllers, any electronic devices, or other electronic circuitry units or elements designed to perform the functions described above.

If implemented as program code, the functions performed by the transmitting apparatus (device) may be stored as one or more instructions or code on a non-transitory computer readable storage medium such as the memory 2510 or any other type of storage. The computer-readable media includes physical computer storage media, which may be any available medium that can be accessed by the computer, or, in general by the processing circuitry 2520. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc or the like. Combinations of different storage media are also possible - in other words, distributed and heterogeneous storage may be employed.

The embodiments and exemplary implementations mentioned above show some non-limiting examples. It is understood that various modifications may be made without departing from the claimed subject matter. For example, modifications may be made to adapt the examples to new systems and scenarios without departing from the central concept described herein.

*Selected embodiments and examples*

Summarizing, some embodiments in the present disclosure relate to transmitting and/or receiving of a joint communication and sensing (JSC) signal. A first waveform for a first signal is obtained, wherein the first waveform includes two or more discrete steps of a chirp in a first frequency range. A second waveform for a second signal is obtained, wherein the second waveform includes two or more discrete steps of a chirp in a second frequency range. A JSC signal is transmitted, which is based on the first signal having the first waveform and the second signal having the second waveform.

The JSC signal includes steps, wherein each step of the JSC signal includes one step out of the discrete steps of the first signal having the first waveform and one step out of the discrete steps of the second signal having the second waveform, and in the JSC signal, a discrete step out of the first signal or a discrete step out of the second signal is associated with at least one bit.

According to an embodiment, a method for a wireless device is provided for transmitting a joint sensing and communication, JSC, signal, comprising: obtaining a first waveform for a first signal, wherein the first waveform includes two or more discrete steps of a chirp in a first frequency range, obtaining a second waveform for a second signal, wherein the second waveform includes two or more discrete steps of a chirp in a second frequency range, transmitting the JSC signal, which is based on the first signal having the first waveform and the second signal having the second waveform, wherein the JSC signal includes steps, wherein each step of the JSC signal includes one step out of the discrete steps of the first signal having the first waveform and one step out of the discrete steps of the second signal having the second waveform, and wherein in the JSC signal, a discrete step out of the first signal or a discrete step out of the second signal is associated with at least one bit.

In an exemplary implementation, the chirp in the first frequency range is a linear chirp, and/or the chirp in the second frequency range is a linear chirp.

For example, the discrete steps in the first frequency range are based on a first set of predetermined parameters, the first set of predetermined parameters including a first starting frequency, a step duration, a step frequency and a sweep bandwidth, the discrete steps in the second frequency range are based on a second set of predetermined parameters, the second set of predetermined parameters including a second starting frequency, the step duration, the step frequency and the sweep bandwidth.

In an exemplary implementation, the transmitted JSC signal is a first JSC signal, the method further comprises: obtaining a measurement result based on the first JSC signal, the measurement result including one or more of a range and a velocity, obtaining a third set of parameters including adapting one or more parameters of the first waveform based on the obtained measurement result, and/or obtaining a fourth set of parameters including adapting one or more parameters of the second waveform based on the obtained measurement result.

For example, an adapting of one or more parameters of a respective waveform includes adapting one or more of

- the first starting frequency,
- the second starting frequency,
- the step duration,
- the step frequency, and
- the sweep bandwidth.

In an exemplary implementation, the method further comprises transmitting a second JSC signal, wherein the second JSC signal is based on the third set of parameters for the first waveform and/or the fourth set of parameters for the second waveform.

For example, in the JSC signal, a frequency of a discrete step out of the first waveform is associated with a first predetermined bit sequence including one or more bits, and/or a frequency of a discrete step out of the second waveform is associated with a second predetermined bit sequence including one or more bits.

In an exemplary implementation, in the JSC signal, a first value of an amplitude of a discrete step out of the first waveform is associated with a bit of value one, and a second value of an amplitude of a discrete step out of the first waveform is associated with a bit of value zero, and the transmitting of the JSC signal includes modulating the amplitude of the discrete steps of the first signal having the first waveform according to a bit sequence, which is to be transmitted.

According to an embodiment, a method for a wireless device is provided for receiving a joint sensing and communication, JSC, signal, comprising: receiving the JSC signal, which is based on a first signal having a first waveform and a second signal having a second waveform, wherein the JSC signal includes steps, each step of the JSC signal includes one step out of discrete steps of the first signal having the first waveform and one step out of discrete steps of the second signal having the second waveform, the first waveform includes two or more discrete steps of a chirp in a first frequency range, the second waveform includes two or more discrete steps of a chirp in a second frequency range, and in the JSC signal, a discrete step out of the first signal or a discrete step out of the second signal is associated with at least one bit, and the method further comprising obtaining a bit sequence based on the discrete steps of the first signal and/or the discrete steps of the second signal.

In an exemplary implementation, the chirp in the first frequency range is a linear chirp, and/or the chirp in the second frequency range is a linear chirp.

For example, the discrete steps in the first frequency range are based on a first set of predetermined parameters, the first set of predetermined parameters including a first starting frequency, a step duration, a step frequency and a sweep bandwidth, the discrete steps in the second frequency range are based on a second set of predetermined parameters, the second set of predetermined parameters including a second starting frequency, the step duration, the step frequency and

the sweep bandwidth.

In an exemplary implementation, the received JSC signal is a first JSC signal, the method further comprises obtaining a measurement result based on the first JSC signal, the measurement result including one or more of a range and a velocity, obtaining a third set of parameters including one or more parameters of the first waveform, which are adapted based on the obtained measurement result, and/or obtaining a fourth set of parameters including one or more parameters of the second waveform based on the obtained measurement result one or more parameters, which are adapted based on the obtained measurement result.

For example, an adapting of one or more parameters of a respective waveform includes adapting one or more of

- the first starting frequency,
- the second starting frequency,
- the step duration,
- the step frequency, and
- the sweep bandwidth.

In an exemplary implementation, the method further comprises receiving a second JSC signal, wherein the second JSC signal is based on the third set of parameters for the first waveform and/or the fourth set of parameters for the second waveform.

For example, in the JSC signal, a frequency of a discrete step out of the first waveform is associated with a first predetermined bit sequence including one or more bits, and/or a frequency of a discrete step out of the second waveform is associated with a second predetermined bit sequence including one or more bits.

In an exemplary implementation, the method further comprises demodulating data from an amplitude modulation of the first signal included in the JSC signal, the demodulating including the obtaining of the bit sequence based on the discrete steps of the first signal; based on the obtained second signal, obtaining a reconstructed first signal, and obtaining a measurement of range and/or velocity based on the reconstructed first signal and the second signal.

For example, a computer program stored in a non-transitory, computer-readable medium is provided. The program comprises code instructions which, when executed on one or more processors, cause the one or more processors to perform steps of the method according to any of the methods above.

According to an embodiment, a wireless device for is provided for transmitting a joint sensing and communication, JSC, signal. The wireless device comprises processing circuitry configured to obtain a first waveform for a first signal, wherein the first waveform includes two or more discrete steps of a chirp in a first frequency range, obtain a second waveform for a second signal, wherein the second waveform includes two or more discrete steps of a chirp in a second frequency range, transmit the JSC signal, which is based on the first signal having the first waveform and the second signal having the second waveform, wherein the JSC signal includes steps, wherein each step of the JSC signal includes one step out of the discrete steps of the first signal having the first waveform and one step out of the discrete steps of the second signal having the second waveform, and wherein in the JSC signal, a discrete step out of the first signal or a discrete step out of the second signal is associated with at least one bit.

In an exemplary implementation, the chirp in the first frequency range is a linear chirp, and/or the chirp in the second frequency range is a linear chirp.

For example, the discrete steps in the first frequency range are based on a first set of predetermined parameters, the first set of predetermined parameters including a first starting frequency, a step duration, a step frequency and a sweep bandwidth, the discrete steps in the second frequency range are based on a second set of predetermined parameters, the second set of predetermined parameters including a second starting frequency, the step duration, the step frequency and the sweep bandwidth.

In an exemplary implementation, the transmitted JSC signal is a first JSC signal, the processing circuitry is further configured to: obtain a measurement result based on the first JSC signal, the measurement result including one or more of a range and a velocity, obtain a third set of parameters including adapting one or more parameters of the first waveform based on the obtained measurement result, and/or obtain a fourth set of parameters including adapting one or more parameters of the second waveform based on the obtained measurement result.

For example, an adapting of one or more parameters of a respective waveform includes adapting one or more of

- the first starting frequency,
- the second starting frequency,
- the step duration,
- the step frequency, and
- the sweep bandwidth.

In an exemplary implementation, the processing circuitry is further configured to transmit a second JSC signal, wherein the second JSC signal is based on the third set of parameters for the first waveform and/or the fourth set of parameters for the second waveform.

For example, in the JSC signal, a frequency of a discrete step out of the first waveform is associated with a first predetermined bit sequence including one or more bits, and/or a frequency of a discrete step out of the second waveform is associated with a second predetermined bit sequence including one or more bits.

In an exemplary implementation, in the JSC signal, a first value of an amplitude of a discrete step out of the first waveform is associated with a bit of value one, and a second value of an amplitude of a discrete step out of the first waveform is associated with a bit of value zero, and the transmitting of the JSC signal includes modulating the amplitude of the discrete steps of the first signal having the first waveform according to a bit sequence, which is to be transmitted.

According to an embodiment, a wireless device for is provided for receiving a joint sensing and communication, JSC, signal. The wireless device comprises processing circuitry configured to receive the JSC signal, which is based on a first signal having a first waveform and a second signal having a second waveform, wherein the JSC signal includes steps, each step of the JSC signal includes one step out of discrete steps of the first signal having the first waveform and one step out of discrete steps of the second signal having the second waveform, the first waveform includes two or more discrete steps of a chirp in a first frequency range, the second waveform includes two or more discrete steps of a chirp in a second frequency range, and in the JSC signal, a discrete step out of the first signal or a discrete step out of the second signal is associated with at least one bit, and obtain a bit sequence based on the discrete steps of the first signal and/or the discrete steps of the second signal.

In an exemplary implementation, the chirp in the first frequency range is a linear chirp, and/or the chirp in the second frequency range is a linear chirp.

For example, the discrete steps in the first frequency range are based on a first set of predetermined parameters, the first set of predetermined parameters including a first starting frequency, a step duration, a step frequency and a sweep bandwidth, the discrete steps in the second frequency range are based on a second set of predetermined parameters, the second set of predetermined parameters including a second starting frequency, the step duration, the step frequency and the sweep bandwidth.

In an exemplary implementation, the received JSC signal is a first JSC signal, the processing circuitry is further configured to obtain a measurement result based on the first JSC signal, the measurement result including one or more of a range and a velocity, obtain a third set of parameters including one or more parameters of the first waveform, which are adapted based on the obtained measurement result, and/or obtain a fourth set of parameters including one or more parameters of the second waveform based on the obtained measurement result one or more parameters, which are adapted based on the obtained measurement result.

For example, an adapting of one or more parameters of a respective waveform includes adapting one or more of

- the first starting frequency,
- the second starting frequency,
- the step duration,
- the step frequency, and
- the sweep bandwidth.

In an exemplary implementation, the processing circuitry is further configured to receive a second JSC signal, wherein the second JSC signal is based on the third set of parameters for the first waveform and/or the fourth set of parameters for the second waveform.

For example, in the JSC signal, a frequency of a discrete step out of the first waveform is associated with a first predetermined bit sequence including one or more bits, and/or a frequency of a discrete step out of the second waveform is associated with a second predetermined bit sequence including one or more bits.

In an exemplary implementation, the processing circuitry is further configured to demodulate data from an amplitude modulation of the first signal included in the JSC signal, the demodulating including the obtaining of the bit sequence based on the discrete steps of the first signal; based on the obtained second signal, obtain a reconstructed first signal, and obtain a measurement of range and/or velocity based on the reconstructed first signal and the second signal.

Moreover, the corresponding methods are provided including steps performed by any of the above-mentioned processing circuitry implementations.

Still further, a computer program is provided, stored on a non-transitory medium, and comprising code instructions which when executed by a computer or by a processing circuitry, performs steps of any of the above-mentioned methods.

According to some embodiments, the processing circuitry and/or the transceiver is embedded in an integrated circuit, IC.

Any of the apparatuses of the present disclosure may be embodied on an integrated chip.

Any of the above-mentioned embodiments and exemplary implementations may be combined.

Although the disclosed subject matter has been described in detail for the purpose of illustration based on what is currently considered to be the most practical and preferred embodiments, it is to be understood that such detail is solely for that purpose and that the disclosed subject matter is not limited to the disclosed embodiments, but, on the contrary, is intended to cover modifications and equivalent arrangements that are within the spirit and scope of the appended claims. For example, it is to be understood that the presently disclosed subject matter contemplates that, to the extent possible, one or more features of any embodiment can be combined with one or more features of any other embodiment.

**Claims**

1. A method for a wireless device for transmitting a joint sensing and communication, JSC, signal, comprising:

   obtaining a first waveform for a first signal, wherein the first waveform includes two or more discrete steps of a chirp in a first frequency range,
   obtaining a second waveform for a second signal, wherein the second waveform includes two or more discrete steps of a chirp in a second frequency range,
   transmitting the JSC signal, which is based on the first signal having the first waveform and the second signal having the second waveform,
   wherein the JSC signal includes steps, wherein each step of the JSC signal includes one step out of the discrete steps of the first signal having the first waveform and one step out of the discrete steps of the second signal having the second waveform, and
   wherein in the JSC signal, a discrete step out of the first signal or a discrete step out of the second signal is associated with at least one bit.

2. The method according to claim 1, wherein the chirp in the first frequency range is a linear chirp, and/or the chirp in the second frequency range is a linear chirp.

3. The method according to any of the claims 1 or 2, wherein

   the discrete steps in the first frequency range are based on a first set of predetermined parameters, the first set of predetermined parameters including a first starting frequency, a step duration, a step frequency and a sweep bandwidth,
   the discrete steps in the second frequency range are based on a second set of predetermined parameters, the second set of predetermined parameters including a second starting frequency, the step duration, the step frequency and the sweep bandwidth.

4. The method according to any of the claims 1 to 3, wherein

   the transmitted JSC signal is a first JSC signal, the method further comprising
   obtaining a measurement result based on the first JSC signal, the measurement result including one or more of a range and a velocity,
   obtaining a third set of parameters including adapting one or more parameters of the first waveform based on the obtained measurement result, and/or
   obtaining a fourth set of parameters including adapting one or more parameters of the second waveform based on the obtained measurement result.

5. The method according to claim 4, wherein
   an adapting of one or more parameters of a respective waveform includes adapting one or more of

   - the first starting frequency,
   - the second starting frequency,
   - the step duration,
   - the step frequency, and
   - the sweep bandwidth.

6. The method according to any of the claims 4 or 5, wherein the method further comprises transmitting a second JSC signal, wherein the second JSC signal is based on the third set of parameters for the first waveform and/or the fourth set of parameters for the second waveform.

7. The method according to any of the claims 1 to 6, wherein in the JSC signal,

a frequency of a discrete step out of the first waveform is associated with a first predetermined bit sequence including one or more bits, and/or
a frequency of a discrete step out of the second waveform is associated with a second predetermined bit sequence including one or more bits.

8. The method according to any of the claims 1 to 6, wherein in the JSC signal,

a first value of an amplitude of a discrete step out of the first waveform is associated with a bit of value one, and a second value of an amplitude of a discrete step out of the first waveform is associated with a bit of value zero, and the transmitting of the JSC signal includes modulating the amplitude of the discrete steps of the first signal having the first waveform according to a bit sequence, which is to be transmitted.

9. A method for a wireless device for receiving a joint sensing and communication, JSC, signal, comprising:

receiving the JSC signal, which is based on a first signal having a first waveform and a second signal having a second waveform,
wherein the JSC signal includes steps, each step of the JSC signal includes one step out of discrete steps of the first signal having the first waveform and one step out of discrete steps of the second signal having the second waveform,
the first waveform includes two or more discrete steps of a chirp in a first frequency range,
the second waveform includes two or more discrete steps of a chirp in a second frequency range, and
in the JSC signal, a discrete step out of the first signal or a discrete step out of the second signal is associated with at least one bit, and
the method further comprising
obtaining a bit sequence based on the discrete steps of the first signal and/or the discrete steps of the second signal.

10. The method according to claim 9,

wherein the chirp in the first frequency range is a linear chirp, and/or the chirp in the second frequency range is a linear chirp; and/or.
wherein the discrete steps in the first frequency range are based on a first set of predetermined parameters, the first set of predetermined parameters including a first starting frequency, a step duration, a step frequency and a sweep bandwidth, and
the discrete steps in the second frequency range are based on a second set of predetermined parameters, the second set of predetermined parameters including a second starting frequency, the step duration, the step frequency and the sweep bandwidth; and/or
wherein the received JSC signal is a first JSC signal, the method further comprising:

obtaining a measurement result based on the first JSC signal, the measurement result including one or more of a range and a velocity,
obtaining a third set of parameters including one or more parameters of the first waveform, which are adapted based on the obtained measurement result, and/or
obtaining a fourth set of parameters including one or more parameters of the second waveform based on the obtained measurement result one or more parameters, which are adapted based on the obtained measurement result.

11. The method according to claim 12, wherein

the one or more parameters of a respective waveform include one or more of

- the first starting frequency,
- the second starting frequency,
- the step duration,
- the step frequency, and
- the sweep bandwidth; and/or

wherein the method further comprises receiving a second JSC signal, wherein the second JSC signal is based on the third set of parameters for the first waveform and/or the fourth set of parameters for the second waveform.

12. The method according to any of the claims 9 to 14, wherein in the JSC signal,

a frequency of a discrete step out of the first waveform is associated with a first predetermined bit sequence including one or more bits, and/or
a frequency of a discrete step out of the second waveform is associated with a second predetermined bit sequence including one or more bits.

13. The method according to any of the claims 9 to 14, wherein the method further comprises

demodulating data from an amplitude modulation of the first signal included in the JSC signal, the demodulating including the obtaining of the bit sequence based on the discrete steps of the first signal,
based on the obtained second signal, obtaining a reconstructed first signal, and
obtaining a measurement of range and/or velocity based on the reconstructed first signal and the second signal.

14. A wireless device for transmitting a joint sensing and communication, JSC, signal, comprising:
processing circuitry configured to

obtain a first waveform for a first signal, wherein the first waveform includes two or more discrete steps of a chirp in a first frequency range,
obtain a second waveform for a second signal, wherein the second waveform includes two or more discrete steps of a chirp in a second frequency range,
transmit the JSC signal, which is based on the first signal having the first waveform and the second signal having the second waveform,
wherein the JSC signal includes steps, wherein each step of the JSC signal includes one step out of the discrete steps of the first signal having the first waveform and one step out of the discrete steps of the second signal having the second waveform, and
wherein in the JSC signal, a discrete step out of the first signal or a discrete step out of the second signal is associated with at least one bit.

15. A wireless device for transmitting a joint sensing and communication, JSC, signal, comprising:
processing circuitry configured to

receive the JSC signal, which is based on a first signal having a first waveform and a second signal having a second waveform,

wherein the JSC signal includes steps, each step of the JSC signal includes one step out of discrete steps of the first signal having the first waveform and one step out of discrete steps of the second signal having the second waveform,
the first waveform includes two or more discrete steps of a chirp in a first frequency range,
the second waveform includes two or more discrete steps of a chirp in a second frequency range, and
in the JSC signal, a discrete step out of the first signal or a discrete step out of the second signal is associated with at least one bit, and

obtain a bit sequence based on the discrete steps of the first signal and/or the discrete steps of the second signal.

WiS

Tx

Itf

Rx

Fig. 1

JSC1

CD2

JSC2

CD1

SD1

Scheduling
device 20

Fig. 2

310 | Legacy Training Fields | Training/Sensing Fields | Data | } Communication Transmission Frame Structures

311 | Legacy Training Fields | Data | Training/Sensing Fields |

320 | Legacy Training Fields | Training/Sensing Fields | (Empty) | } Empty Communication Transmission Frame Structures

321 | Legacy Training Fields | (Empty) | Training/Sensing Fields |

330 | Sensing Field/Waveform | } Sensing Frame Structure

340 | Joint Sensing and Communication Field/Waveform | } Joint Sensing and Communication Frame Structure

# Fig. 3

**Fig. 4a**

**Fig. 4b**

EP 4 556 936 A1

Fig. 5a

Fig. 5b

30

**Fig. 6**

**Fig. 7**

**Fig. 8**

**Fig. 9**

**Fig. 10**

**Fig. 11a**

**Fig. 11b**

**Fig. 12**

**Fig. 13**

Fig. 14

Fig. 15

**Fig. 16**

**Fig. 17**

EP 4 556 936 A1

Fig. 18

1910

ISAC-MFSK
waveform
transmission

1920

Communication Data
demodulation

1930

Range and Velocity
estimation

short range

long range

short range,
high velocity resolution

long range,
high velocity resolution

$\uparrow f_{offset}$

$\downarrow f_{offset}$

$\uparrow f_{offset}, T_{step} \downarrow$

$\downarrow f_{offset}, T_{step} \downarrow$

1940

1950

**Fig. 19**

1960

1970

Fig. 20

Fig. 21

**Fig. 22**

**Fig. 23**

S2410 — Obtain a first waveform for a first signal

S2420 — Obtain a second waveform for a second signal

S2430 — Transmit a JSC signal based on the first signal and the second signal

**Fig. 24a**

S2450 — Receive a JSC signal based on a first signal having a first waveform and a second signal having a second waveform

S2460 — Obtain a bit sequence based on the discrete steps of the first signal and/or the discrete steps of the second signal

**Fig. 24b**

2501

| Memory 2510 | | Interface 2530 |
| Processing circuitry 2520 | | Wireless transceiver 2540 |

2500

**Fig. 25a**

Memory 2511

Estimate range/velocity 2560

Obtain waveforms 2570

Generate JSC signal 2580

Control further actions 2590

**Fig. 25b**

Memory 2512

Estimate range/velocity 2561

Process received signal 2571

Obtain a bit sequence 2581

Control further actions 2591

**Fig. 25c**

Europäisches
Patentamt

European
Patent Office

Office européen
des brevets

# EUROPEAN SEARCH REPORT

**Application Number**

EP 23 20 9717

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/197960 A1 (INTERDIGITAL CE INTERMEDIATE [FR]) 7 October 2021 (2021-10-07) * page 26, line 32 – page 27, line 1; figures 2A,2B,3B * * paragraph [0120] – paragraph [0150]; figures 1,6A,6B,10 * ----- | 1–15 | INV. G01S7/00 G01S13/34 G01S13/38 |
| X | NL 2 022 643 B1 (UNIV DELFT TECH [NL]) 1 September 2020 (2020-09-01) * page 2 – page 4; figures 2A,2B * * page 9, line 19; figure 15 * * page 6, line 21 – line 22 * ----- | 1–15 | |

**TECHNICAL FIELDS SEARCHED (IPC)**

G01S

The present search report has been drawn up for all claims

| Place of search | Date of completion of the search | Examiner |
|---|---|---|
| Munich | 28 March 2024 | Riccio, Ettore |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 9717

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2024

| Patent document cited in search report | | Publication date | Patent family member(s) | Publication date |
|---|---|---|---|---|
| WO 2021197960 | A1 | 07-10-2021 | NONE | |
| NL 2022643 | B1 | 01-09-2020 | | |

EPO FORM P0459

For more details about this annex : see Official Journal of the European Patent Office, No. 12/82